# EUROPÄISCHE PATENTSCHRIFT

(11) **EP 3 963 573 B1**
(45) Veröffentlichungstag und Bekanntmachung des Hinweises auf die Patenterteilung: **05.03.2025**
(21) Anmeldenummer: 20723386.7
(22) Anmeldetag: 30.04.2020
(51) Int. Cl.: G10L 15/24

(54) **ERFASSUNGSVORRICHTUNG FÜR EIN SPRACHSIGNAL EINER PERSON SOWIE VERFAHREN ZUM ERFASSEN EINES SPRACHSIGNALS EINER PERSON MIT EINER DERARTIGEN ERFASSUNGSVORRICHTUNG**
DETECTION DEVICE FOR A VOICE SIGNAL OF A PERSON, AND METHOD FOR DETECTING A VOICE SIGNAL OF A PERSON USING SUCH A DETECTION DEVICE
ARRANGEMENT D'ACQUISITION POUR UN SIGNAL VOCAL D'UNE PERSONNE AINSI QUE PROCÉDÉ D'ACQUISITION D'UN SIGNAL VOCAL D'UNE PERSONNE AVEC UN TEL ARRANGEMENT D'ACQUISITION

(30) Priorität: 03.05.2019 DE 102019206371
(43) Veröffentlichungstag der Anmeldung: 09.03.2022
(73) Patentinhaber: AUDI AG, 85045 Ingolstadt (DE)
(72) Erfinder: KLUG, Markus, 85057 Ingolstadt (DE); MOLL, Tobias, 85055 Ingolstadt (DE); SCHEUCHENPFLUG, Johannes, 85107 Baar-Ebenhausen (DE)
(74) Vertreter: Hofstetter, Schurack & Partner
(86) Internationale Anmeldenummer: PCT/EP2020/062114
(87) Internationale Veröffentlichungsnummer: WO 2020/225124

(56) Entgegenhaltungen:
- ROTHBERG S J ET AL: "Laser vibrometry: Pseudo-vibrations", JOURNAL OF SOUND AND VIBRATION, ELSEVIER, AMSTERDAM , NL, vol. 135, no. 3, 22 December 1989 (1989-12-22), pages 516 - 522, XP024200252, ISSN: 0022-460X, [retrieved on 19891222], DOI: 10.1016/0022-460X(89)90705-0
- YEKUTIEL AVARGEL ET AL: "ROBUST SPEECH RECOGNITION USING AN AUXILIARY LASER-DOPPLER VIBROMETER SENSOR", 2011 SPEECH PROCESSING CONFERENCE, 21 June 2011 (2011-06-21), XP055716418
- PENG RENHUA ET AL: "Bandwidth extension for speech acquired by laser Doppler vibrometer with an auxiliary microphone", 2015 10TH INTERNATIONAL CONFERENCE ON INFORMATION, COMMUNICATIONS AND SIGNAL PROCESSING (ICICS), IEEE, 2 December 2015 (2015-12-02), pages 1 - 4, XP032894750, DOI: 10.1109/ICICS.2015.7459894
- WEIHONG LI ET AL: "LDV Remote Voice Acquisition and Enhancement", INTERNATIONAL CONFERENCE ON PATTERN RECOGNITION, 20 August 2006 (2006-08-20), US, pages 262 - 265, XP055717974, ISSN: 1051-4651, DOI: 10.1109/ICPR.2006.746

## Beschreibung

Die Erfindung betrifft eine Erfassungsvorrichtung für ein Sprachsignal einer Person. Die Erfindung betrifft außerdem ein Kraftfahrzeug mit einer derartigen Erfassungsvorrichtung sowie ein Verfahren zum Erfassen eines Sprachsignals einer Person mit einer derartigen Erfassungsvorrichtung.

Im menschlichen Körper ist der Kehlkopf, der sogenannte Larynx, der als Teil des Atemtrakts den Übergang vom Rachen zur Luftröhre im vorderen Halsbereich umfasst, ausschlaggebend für eine Erzeugung einer menschlichen Stimme. Denn für die Erzeugung der Stimme werden mittels der Kehlkopfmuskulatur die im Kehlkopfbereich angeordneten Stimmlippen zum Schwingen gebracht. Es sind bereits verschiedene technische Methoden bekannt, mit denen diese Mikrobewegungen im vorderen Halsbereich, die immer dann auftreten, wenn eine Person spricht, erfasst und ausgewertet werden können. Diese Methoden benötigen jeweils einen Sensor, der in einer direkten Sichtverbindung zum vorderen Halsbereich der Person angeordnet sein muss, damit die Mikrobewegungen im vorderen Halsbereich, die Informationen über ein Sprachsignal enthalten, erfasst werden können. Es wird also ein optisches Bauteil benötigt, das bevorzugt im Sichtbereich der Person positioniert sein muss.

Die US 2016/0267911 A1 beschreibt ein Fahrzeugspracherfassungssystem, das einen optischen Sensor sowie ein Mikrofon umfasst. Der optische Sensor ist hierbei in einem Rückspiegel eines Fahrzeugs angeordnet und dazu ausgelegt, optisch abgeleitete akustische Signale einer Person im Kraftfahrzeug zu erfassen. Der optische Sensor ist hierbei als Interferometer ausgebildet.

Die US 2014/0119737 A1 beschreibt ein System zum Erfassen von sprachbezogenen akustischen Signalen mittels einer laserbasierten Erfassungseinrichtung, die als Maske ausgebildet ist. Diese Maske wird über einem Teil eines Gesichts eines Sprechers getragen und verdeckt hierbei den Mund des Benutzers. Ein Lasermikrofon des Systems ist dazu ausgebildet, Vibrationen der Maske zu erfassen und in Form von Sprachsignalen auszugeben.

Die US 6,317,237 B1 beschreibt eine Vorrichtung, von der ein Infrarotlaserstrahl in Richtung einer Glasscheibe eines Gebäudes ausgesendet wird, an der der Lichtstrahl reflektiert wird, wobei der reflektierte Lichtstrahl von einer Empfangsvorrichtung aufgenommen wird. Hiermit soll eine Vibration der Glasscheibe erfasst werden, die durch Stimmen in dem Raum erzeugt wird. Mit dieser Vorrichtung soll also ebenfalls ein Sprachsignal innerhalb eines Raumes erfasst und ausgewertet werden.

Aus dem Stand der Technik sind optische Beugungsgitter bekannt, die holographisch hergestellt werden und daher als holografische Gitter bezeichnet werden. Diesbezüglich ist aus der wissenschaftlichen Veröffentlichung "Volume-phase holographic gratings and their potential for astronomical applications" (S. C. Barden, J. A. Arns und W. S. Colburn, Proceedings SPIE 3355, Optical Astronomical Instrumentation, 1998) bekannt, dass Licht, das auf ein derartiges holografisches Gitter in einem Winkel trifft, der deutlich außerhalb des Winkelbereichs liegt, der die Bragg-Bedingung erfüllt, ungebeugt das holografische Gitter passiert. Trifft jedoch Licht aus einem Winkel auf das holografische Gitter, sodass die Bragg-Bedingung zumindest in etwa erfüllt ist, wird das Licht in einem Winkel gebeugt. Ein ähnliches Verhalten zeigt sich bezüglich einer Wellenlängenabhängigkeit des Einflusses des holografischen Gitters auf Licht. Denn Licht mit einer Wellenlänge, die deutlich außerhalb des Wellenlängenbereichs liegt, der durch die Bragg-Bedingung als sogenannte Bragg-Wellenlänge vorgegeben wird, passiert ebenfalls das holografische Gitter ohne gebeugt zu werden und lediglich Licht mit einer Wellenlänge, die die Bragg-Bedingung zumindest in etwa erfüllt, wird am holografischen Gitter gebeugt. Mittels komplexer holografischer Gitterstrukturen ist es somit beispielsweise möglich, dass Licht mit zwei verschiedenen Wellenlängenbereichen in jeweils demselben Winkel gebeugt wird. Außerdem kann durch ein holografisches Gitter beispielsweise Licht mit verschiedenen Wellenlängen in verschiedene Lichtwege aufgeteilt werden, sodass mithilfe eines holografischen Gitters ein dispersiver Strahlteiler realisiert werden kann. YEKUTIEL AVARGEL ET AL: "ROBUST SPEECH RECOGNITION USING AN AUXILIARY LASER-DOPPLER VIBROMETER SENSOR" offenbart laser-basierte Signalextraktion zur Verbesserung der Spracherkennung, wobei eine Laserdiode zur Messung der Kehlkopfbewegung verwendet wird um verbesserte Sprachmerkmale zu extrahieren.

Es ist die Aufgabe der Erfindung eine Lösung bereitzustellen, mittels der eine möglichst unscheinbare Erfassungsvorrichtung für ein Sprachsignal einer Person bereitgestellt werden kann.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren offenbart.

Die erfindungsgemäße Erfassungsvorrichtung für ein Sprachsignal einer Person, umfasst eine Lichtquelle, eine Sensoreinrichtung, eine Auswerteeinrichtung, sowie ein erstes flächiges Trägermedium. Die Auswerteeinrichtung weist wiederum eine Umwandlungseinheit und eine Interpretationseinheit auf. Bei der ersten Lichtquelle handelt es sich beispielsweise um einen Emitter eines Laserstrahls im Infrarotwellenlängenbereich. Die Sensoreinrichtung wiederum ist dazu ausgebildet, reflektiertes Licht der Lichtquelle zu erfassen und in Form von Sensordaten bereitzustellen. Bei der Sensoreinrichtung handelt es sich beispielsweise um einen Sensor der dazu ausgebildet ist, Infrarotlichtsignale zu erfassen, das heißt um einen Infrarotsensor.

Das erste flächige Trägermedium ist als Lichtleiter ausgebildet, an dem ein Einkoppelbereich und ein Auskoppelbereich bereitgestellt sind. Das Trägermedium ist beispielsweise als transparente Folie als Kunststoff realisiert, wobei das Trägermedium zusätzlich Licht aus einer Umgebung an die Sensoreinrichtung weiterleitet. Das heißt, das Trägermedium kann Licht, das in das Trägermedium eingekoppelt ist, mittels interner Reflexion, bevorzugt Totalreflexion, an die Sensoreinrichtung weiterleiten. Die Sensoreinrichtung selbst, kann dann das weitergeleitete Licht, wenn es wieder aus dem Trägermedium ausgekoppelt ist, erfassen und daraus Sensordaten erzeugen oder generieren. Das hierfür benötigte Licht wird an einer Oberfläche des ersten flächigen Trägermediums mit dem Einkoppelbereich und dem Auskoppelbereich mittels des ersten flächigen Trägermediums erfasst oder eingefangen. Das Trägermedium ist hierbei als lichtleitendes Trägermedium ausgebildet.

Die Lichtquelle der Erfassungsvorrichtung ist dazu ausgebildet, gepulstes Licht auszusenden, wobei es sich bei dem gepulsten Licht bevorzugt um gepulstes Infrarotlicht handelt. Die Lichtquelle kann hierfür beispielsweise seitlich des flächigen Trägermediums angeordnet sein, oder beispielsweise neben dem ersten flächigen Trägermedium. Der Einkoppelbereich ist als holografisches Element mit einer ersten Ablenkstruktur ausgebildet. Eine Beschreibung einer Funktionsweise eines derartigen holografischen Elements, das häufig als optisches Gitter bezeichnet wird und das mittels holografischer Methoden hergestellt werden kann, findet sich beispielsweise in der oben zitierten wissenschaftlichen Publikation. Der Einkoppelbereich kann entsprechend zum Beispiel als Beugungsgitter realisiert sein. Die erste Ablenkstruktur des Einkoppelbereichs ist dazu ausgebildet, Licht, das von der Lichtquelle ausgesendet und an der Person reflektierte wird, in das erste flächige Trägermedium einzukoppeln. Mittels des Einkoppelbereichs wird folglich in diesem Beispiel das reflektierte gepulste Infrarotlicht, das an der Person reflektiert wurde, in die Erfassungsvorrichtung selbst, das heißt in das erste flächige Trägermedium, eingekoppelt. Hierbei wird die Lichtquelle in einer bevorzugten Einbaulage derart angeordnet, dass das gepulste Licht in Richtung einer vorderen Halsregion der Person ausgesendet wird und dort reflektiert wird. Die erste Ablenkstruktur ist also dazu ausgebildet, das an der Person reflektierte Licht in das Trägermedium einzukoppeln und dabei derart stark umzulenken, dass das eingekoppelte Licht eine Grenzwinkelbedingung erfüllt.

Das erste flächige Trägermedium ist dazu ausgebildet, das eingekoppelte reflektierte Licht mittels interner Reflexion von dem Einkoppelbereich an den Auskoppelbereich zu übertragen. Das reflektierte Licht kann innerhalb des Trägermediums in zick-zack-artigen Bewegungen entlang einer Richtung parallel zu einer Ebene der Oberfläche des ersten flächigen Trägermediums geleitet werden. Schließlich weist der Auskoppelbereich, der ebenfalls als holografisches Element ausgebildet ist, eine zweite Ablenkstruktur auf, die dazu ausgelegt ist, das übertragene reflektierte Licht, das auf die zweite Ablenkstruktur fällt, aus dem ersten flächigen Trägermedium auszukoppeln. Die zweite Ablenkstruktur der Auskoppelbereichs kann beispielsweise ebenfalls als Beugungsgitter realisiert sein.

Mit anderen Worten wird das gepulste Licht der Lichtquelle, das an der Person reflektiert wird, an der ersten Ablenkstruktur des Einkoppelbereichs abgelenkt oder gebeugt, in das Trägermedium eingekoppelt, von dem Trägermedium übertragen, an der zweiten Ablenkstruktur abgelenkt oder gebeugt und dort wieder aus dem Trägermedium ausgekoppelt. Der Einkoppelbereich erstreckt sich hierbei bevorzugt über eine gesamte Oberfläche des flächigen Trägermediums, sodass über eine relativ große Fläche, je nach Abmaß des flächigen Trägermediums, das reflektierte Licht erfasst oder abgegriffen werden kann. Alternativ dazu kann sich der Einkoppelbereich über einen Teilbereich der Oberfläche des ersten flächigen Trägermediums erstrecken.

Von dem Einkoppelbereich aus kann das eingekoppelte reflektierte Licht zu einem beliebig gewählten Auskoppelbereich durch das erste flächige Trägermedium transportiert werden. Zum Erfassen des aus dem Trägermedium ausgekoppelten Lichts, liegt die Sensoreinrichtung an den Auskoppelbereich an. Die Sensoreinrichtung selbst ist dazu ausgebildet, dass im Auskoppelbereich ausgekoppelte Licht zu erfassen und in Form von Sensordaten bereitzustellen. Diese Sensordaten beschreiben eine Laufzeit des von der Lichtquelle ausgesendeten und an der Person reflektierten gepulsten Lichts, also des von der Sensoreinrichtung erfassten Lichts. Die Sensoreinrichtung ist folglich als LIDAR-Gerät (Abkürzung für englisch light detection and ranging) ausgebildet, da sie dazu ausgebildet ist, eine Laufzeitmessung mit gepulstem Licht durchzuführen. Das LIDAR-Gerät ist eine mit einem Radar verwandte Methode zur optischen Abstands- und Geschwindigkeitsmessung. Hierbei wird das nach dem Aussenden eines Lichtimpulses zurückgestreute Licht detektiert und aus einer Laufzeit der entsprechenden Lichtsignale kann eine Entfernung zum Ort der Streuung der Lichtimpulse berechnet werden.

Die Auswerteeinrichtung der Erfassungsvorrichtung ist dazu ausgebildet, mittels der Umwandlungseinheit die Sensordaten in Schwingungsdaten umzuwandeln. Denn aus den Laufzeitunterschieden des jeweiligen gepulsten Lichtsignals, die von der Sensoreinrichtung bereitgestellt werden, lässt sich die Entfernung zu der Person zurückrechnen und somit letztendlich die Mikroschwingung im vorderen Halsbereich der Person detektieren. Voraussetzung hierfür ist, dass die Erfassungsvorrichtung in der bevorzugten Einbaulage positioniert ist, sodass das Licht der Lichtquelle im vorderen Halsbereich der Person reflektiert wird.

Mittels der Interpretationseinheit der Auswerteeinrichtung wird durch Auswerten der Schwingungsdaten unter Anwendung eines Sprachinterpretationskriteriums das Sprachsignal der Person bereitgestellt. Die Schwingungsdaten werden also dazu herangezogen, die von der Person gesprochene Sprache in Form des Sprachsignals zu bestimmen. Das Sprachinterpretationskriterium enthält hierbei beispielsweise jeweilige Schwingungsdaten, die mit jeweiligen Sprachsignalkomponenten, aus denen sich letztendlich das Sprachsignal der Person zusammensetzt, korreliert sind, sodass die Interpretationseinheit dazu ausgelegt ist, unter Hinzuziehen des Sprachinterpretationskriteriums die Schwingungsdaten derart auszuwerten, dass das Sprachsignal der Person breitstellbar ist. Hierbei wird zumindest ausgenutzt, dass das reflektierte Licht mittels des ersten Trägermediums mit dem Einkoppelbereich und dem Auskoppelbereich, das flächig ausgebildet ist, zu der Sensoreinrichtung übertragen wird. Das erste flächige Trägermedium kann also beispielsweise in einem Kraftfahrzeug angeordnet sein, und zwar, wenn es transparent ausgebildet ist, im Bereich der Windschutzscheibe des Kraftfahrzeugs. Wird nun beispielsweise mittels einer beispielsweise im Bereich des oberen Armaturenbretts positionierten Lichtquelle das gepulste Laserlicht in Richtung des Fahrers des Kraftfahrzeugs ausgesendet, kann mit dem flächigen Trägermedium das reflektierte Licht, das bevorzugt im vorderen Halsbereich der Person reflektiert wurde, aufgenommen, eingekoppelt und zu einer beispielsweise an einem Randbereich der Windschutzscheiben positionierten Sensoreinrichtung übermittelt werden. Hierdurch kann die Erfassungsvorrichtung besonders unscheinbar in das Kraftfahrzeug integriert werden, da die große Fläche der Windschutzscheibe unauffällig dort, wo das transparente erste flächige Trägermediums angeordnet ist, als Erfassungsbereich für das reflektierte Licht verwendet wird.

Eine derartige Erfassungsvorrichtung, die das Sprachsignal der Person bereitstellt, kann beispielsweise zur Ergänzung eines Spracherkennungssystems des Kraftfahrzeugs verwendet werden, wobei das Spracherkennungssystem beispielsweise dazu ausgelegt ist, mittels erkannter und interpretierter akustischer Befehle des Fahrers eine vorbestimmte Fahrerassistenzfunktion des Kraftfahrzeugs anzusteuern. Hierdurch ergibt sich der Vorteil, dass ein Einfluss von Störgeräuschen reduziert wird, wie beispielsweise einem Motorgeräusch des Kraftfahrzeugs oder Sprachsignalen anderer Personen im Kraftfahrzeug, da letztendlich die Kehlkopfbewegung und somit die für die Erzeugung des Sprachsignals relevante Region des Sprechers, das heißt des Fahrers, direkt erfasst und ausgewertet wird.

Die Auswerteeinrichtung mit den Untereinheiten der Umwandlungseinheit und der Interpretationseinheit weist beispielsweise eine Prozessoreinrichtung auf, die dazu ausgelegt ist, das Sprachsignal der Person bereitzustellen. Die Prozessoreinrichtung kann hierzu zumindest einen Mikroprozessor oder zumindest einen Mikrocontroller aufweisen. Des Weiteren kann die Prozessoreinrichtung einen Programmcode aufweisen, der dazu eingerichtet ist, bei Ausführen durch die Prozessoreinrichtung das Sprachsignal der Person bereitzustellen. Der Programmcode kann in einem Datenspeicher der Prozessoreinrichtung gespeichert sein.

Zu der Erfindung gehören auch Ausgestaltungsformen, durch die sich zusätzliche Vorteile ergeben.

In einer vorteilhaften Ausgestaltungsform der Erfindung ist es vorgesehen, dass beim Auswerten der Schwingungsdaten unter Anwendung des Sprachinterpretationskriteriums die bereitgestellten Schwingungsdaten mit in der Interpretationseinheit hinterlegten Referenzschwingmustern abgeglichen werden, wobei die jeweiligen hinterlegten Referenzschwingmuster jeweiligen Sprachsignalen zugeordnet sind. Das Sprachinterpretationskriterium enthält also jeweilige Schwingungsdaten, die sogenannten Referenzschwingmuster, die mit jeweiligen Sprachsignalkomponenten, aus denen sich letztendlich das Sprachsignal der Person zusammensetzt, korreliert sind, sodass die Interpretationseinheit dazu ausgelegt ist, unter Hinzuziehen des Sprachinterpretationskriteriums die Schwingungsdaten derart auszuwerten, dass das Sprachsignal der Person breitstellbar ist. Das Sprachinterpretationskriterium stellt also eine Art Sprachsignaldatenbank bereit, anhand der die Schwingungsdaten schnell und zuverlässig entsprechenden Sprachsignale zugeordnet werden können.

Erfindungsgemäß ist es vorgesehen, dass der Einkoppelbereich und der Auskoppelbereich als Ablenkstruktur zumindest ein holografisches Oberflächengitter oder ein holografisches Volumengitter aufweisen. In diesem Zusammenhang kann die Erfassungsvorrichtung auch als HoloCam, kurz für holografische Kamera, bezeichnet werden.

Ein optisches Gitter, auch Beugungsgitter genannt, sowie dessen Wirkungsweise und Herstellungsverfahren ist, wie bereits erwähnt, allgemein bekannt, wie es beispielsweise aus der oben zitierten wissenschaftlichen Publikation hervorgeht. Grundsätzlich kann ein optisches Gitter auf zumindest abschnittsweise periodischen Strukturen, einer sogenannten Gitterstruktur, in einem Substrat beruhen. Mittels einer solchen Gitterstruktur kann ein optisches Gitter durch den physikalischen Effekt der Beugung eine Lichtlenkung, wie sie zum Beispiel von Spiegeln, Linsen oder Prismen bekannt ist, herbeiführen. Fällt Licht, das heißt fallen Lichtstrahlen auf das optische Gitter, wobei die einfallenden Lichtstrahlen insbesondere die Bragg-Gleichung erfüllen, werden die Lichtstrahlen durch das optische Gitter gebeugt oder abgelenkt.

Die Lichtlenkung kann somit insbesondere durch Interferenzerscheinungen der durch das optische Gitter gebeugten Lichtstrahlen erfolgen. Die Ablenkstruktur des Einkoppelbereichs oder Auskoppelbereichs kann dementsprechend auch als Beugungsstruktur bezeichnet werden.

Vorzugsweise kann ein optisches Gitter gegenüber dem einfallenden Licht richtungsselektiv oder winkelselektiv ausgebildet sein. Somit kann nur Licht, insbesondere ein Anteil des Lichts, das aus einer vorbestimmten Einfallsrichtung, zum Beispiel in einem vorbestimmten Winkel, auf ein optisches Gitter fällt, abgelenkt werden. Licht, insbesondere ein Anteil des Lichts, das aus einer anderen Richtung auf das optische Gitter fällt, wird vorzugsweise nicht abgelenkt oder umso weniger, je größer der Unterschied zur vorbestimmten Einfallsrichtung ist. Der Lichtanteil, welcher von der vorbestimmten Einfallsrichtung oder Optimaleinfallsrichtung abweicht, kann folglich vorzugsweise ungehindert durch das Substrat mit dem optischen Gitter propagieren.

Zusätzlich oder alternativ kann ein optisches Gitter noch wellenlängenselektiv oder frequenzselektiv ausgebildet sein. Somit kann nur Licht, insbesondere ein erster Anteil des Lichts mit einer vorbestimmten Wellenlänge von dem optischen Gitter in einem bestimmten Beugungswinkel abgelenkt oder gebeugt werden. Licht, insbesondere ein zweiter Anteil des Lichts mit einer anderen als der vorbestimmten Wellenlänge wird vorzugsweise nicht abgelenkt, oder umso weniger je größer der Unterschied zur vorbestimmten Wellenlänge ist. Der zweite Lichtanteil, welcher von der vorbestimmten Wellenlänge oder Optimalwellenlänge abweicht, kann folglich vorzugsweise ungehindert durch das Substrat mit dem optischen Gitter propagieren. Dadurch kann beispielsweise von polychromatischem Licht, welches auf das optische Gitter trifft, wenigstens ein monochromatischer Lichtanteil abgespaltet werden. **In** vorteilhafter Weise ist der Ablenkeffekt für die Optimalwellenlänge maximal und fällt zu längeren und kürzeren Wellenlängen hin, beispielsweise gemäß einer Gaußglocke, ab oder wird schwächer. Insbesondere wirkt der Ablenkeffekt nur auf einen Bruchteil des sichtbaren Lichtspektrums und/oder in einem Winkelbereich kleiner als 90 Grad.

Eine Herstellung eines optischen Gitters kann insbesondere mittels Belichtung eines Substrats, also beispielsweise fotolithografisch oder holografisch, erfolgen. In diesem Zusammenhang kann das optische Gitter dann auch als holografisches oder holografisch-optisches Gitter bezeichnet werden. Es sind zwei Arten von holografisch-optischen Gittern bekannt: holografische Oberflächengitter (surface holografic gratings, kurz: SHG) und holografische Volumengitter (volume holografic gratings, kurz: VHG). Bei einem holografischen Oberflächengitter kann die Gitterstruktur durch optisches Verformen einer Oberflächenstruktur des Substrats erzeugt werden. Durch die veränderte Oberflächenstruktur kann auftreffendes Licht abgelenkt, zum Beispiel reflektiert werden. Beispiele für holografische Oberflächengitter sind sogenannte Sägezahn- oder Blazegitter. Im Gegensatz dazu kann die Gitterstruktur bei holografischen Volumengittern in das ganze Volumen oder einen Teilbereich des Volumens des Substrats eingearbeitet sein. Holografische Oberflächengitter und holografische Volumengitter sind in der Regel frequenzselektiv. Es sind jedoch auch optische Gitter bekannt die polychromatisches Licht beugen können. Diese werden als holografische Mehrfachvolumengitter (multiplexed volume holografic gratings, kurz: MVHG) bezeichnet und können beispielsweise durch Verändern der Periodizität der Gitterstruktur eines optischen Gitters oder durch Anordnen mehrerer holografisches Volumengitter hintereinander hergestellt werden.

Als Material für das besagte Substrat zum Einarbeiten eines optischen Gitters eignet sich besonders ein Polymer, insbesondere ein Fotopolymer, oder eine Folie, insbesondere eine fotosensitive Folie, zum Beispiel aus Kunststoff oder organischen Stoffen. Substrate die eine Ablenkstruktur zum Beugen von Licht, beispielsweise in Form eines optischen Gitters aufweisen, können auch als holografisch-optische Elemente (HOE) bezeichnet werden.

Durch die beschriebene Ausbildung des Einkoppelbereichs und des Auskoppelbereichs wird daher das Beugen des auf den Einkoppelbereich fallenden Lichts zur beispielsweise seitlich an der Deckplatte angeordneten Sensoreinrichtung möglich, wodurch letztendlich, nach den oben beschriebenen Auswerteschritten, das Sprachsignal bereitgestellt werden kann.

Eine weitere besonders vorteilhafte Ausgestaltungsform der Erfindung sieht vor, dass an einem zweiten flächigen Trägermedium ein Lichteinkoppelbereich und ein Lichtauskoppelbereich bereitgestellt sind. Die Erfassungsvorrichtung kann also zusätzlich zum ersten Trägermedium noch ein zweites Trägermedium umfassen. Der Lichteinkoppelbereich ist hierbei als holografisches Element mit einer dritten Ablenkstruktur ausgebildet. Die dritte Ablenkstruktur ist dazu ausgelegt, Licht, das von der Lichtquelle der Erfassungsvorrichtung auf die dritte Ablenkstruktur fällt, in das zweite flächige Trägermedium einzukoppeln. Die dritte Ablenkstruktur des Lichteinkoppelbereichs kann beispielsweise als Beugungsgitter realisiert sein. Der Lichteinkoppelbereich ist hierbei derart positioniert, dass das von der Lichtquelle ausgesendete gepulste Licht über den Lichteinkoppelbereich in das zweite flächige Trägermedium eingebracht werden kann. Das zweite flächige Trägermedium ist dazu ausgebildet, das eingekoppelte Licht mittels interner Reflexion von dem Lichteinkoppelbereich an den Lichtauskoppelbereich zu übertragen. Der Lichtauskoppelbereich ist wiederum als holografisches Element mit einer vierten Ablenkstruktur ausgebildet, wobei die vierte Ablenkstruktur beispielsweise ebenfalls als Beugungsgitter realisiert ist. Die vierte Ablenkstruktur ist dazu ausgelegt, das übertragene Licht, das auf die vierte Ablenkstruktur fällt, aus dem zweiten Trägermedium auszukoppeln und in Richtung der Person auszusenden. Es ist also möglich, dass über ein flächiges Trägermedium, das hier als zweites flächiges Trägermedium beschrieben wird, das Licht der Lichtquelle von der Lichtquelle zu dem Lichtauskoppelbereich transportiert wird, von dem aus das gepulste Licht in Richtung der Person ausgesendet wird, woraufhin es an der Person reflektiert und über den Einkoppelbereich in das erste flächige Trägermedium und letztendlich zur Sensoreinrichtung übertragen wird.

Das zweite flächige Trägermedium kann separat zum ersten flächigen Trägermedium und beispielsweise ebenfalls als transparente Folie ausgebildet sein. Es ist nun beispielsweise möglich, dass die Lichtquelle in einem Bereich einer ersten A-Säule eines Kraftfahrzeugs angeordnet ist, woraufhin das Licht der Lichtquelle über das zweite flächige Trägermedium, das auf der Windschutzscheibe des Kraftfahrzeugs angeordnet ist, zu einem zentralen Punkt mittig vor dem Fahrersitz des Kraftfahrzeugs übermittelt und mittels eines dort positionierten Lichtauskoppelbereich in Richtung des vorderen Halsbereichs des Fahrers ausgesendet wird. Direkt neben dem zweiten Trägermedium kann in diesem Beispiel das erste Trägermedium, das ebenfalls als transparente Folie auf der Windschutzscheibe angeordnet ist, positioniert sein, sodass der Einkoppelbereich nah am Lichtauskoppelbereich positioniert ist oder sich sogar zumindest teilweise mit diesem überdeckt. An dem Einkoppelbereich wird nun das an dem vorderen Halsbereich der Person reflektierte Licht in das erste Trägermedium eingekoppelt, das daraufhin das Licht beispielsweise zu einer zweiten A-Säule des Kraftfahrzeugs weiterleitet, in der die Sensoreinrichtung sowie beispielsweise ebenfalls die Auswerteeinrichtung positioniert sind. Hierdurch ist es möglich, dass eine komplett unscheinbare Erfassungsvorrichtung realisiert ist, die für den Fahrer des Kraftfahrzeugs in der beschriebenen Einbaulage nicht zu sehen ist, insbesondere dann nicht, wenn das Licht der Lichtquelle in einem nicht sichtbaren Wellenlängenbereich ausgesendet wird, beispielsweise als Infrarotlicht. Es kann also durch Ausnutzen der Eigenschaften des HOE erreicht werden, dass weder Lichtquelle noch Sensoreinrichtung in einem Sichtbereich der Person, deren Sprachsignal bereitgestellt werden soll, angeordnet sein muss, sondern dass eine Signalübertragung des von der Lichtquelle ausgesendeten sowie des von der Person reflektierten Lichts mittels des HOE hin zur jeweiligen vorgegebenen Zielposition, das heißt zur vorderen Halsregion der Person beziehungsweise zur Sensoreinrichtung, möglich ist.

Gemäß einer besonders vorteilhaften Ausgestaltungsform der Erfindung ist es vorgesehen, dass das erste flächige Trägermedium und das zweite flächige Trägermedium als ein gemeinsames Hauptträgermedium ausgebildet sind, an dem der Einkoppelbereich, der Auskoppelbereich, der Lichteinkoppelbereich und der Lichtauskoppelbereich bereitgestellt sind. Es ist also vorgesehen, dass die Erfassungsvorrichtung nur ein Trägermedium, das so genannte Hauptträgermedium, umfasst, das heißt das erste flächige Trägermedium und das zweite flächige Trägermedium räumlich zusammenhängend ausgebildet sind. Durch die flächige Ausführung des gemeinsamen Hauptträgermediums wird also eine große Lichtaustrittsfläche für das Licht der Lichtquelle sowie eine große Lichteintrittsfläche für das reflektierte Licht erreicht, wodurch sich Ungenauigkeiten der Messung bis zu einem gewissen Grad ausgleichen lassen. Es wird also beispielsweise möglich, dass eine Wellenfront mittels des HOE in Richtung der Person ausgesendet wird und ebenfalls die reflektierte Wellenfront über die vorbestimmte Lichteintrittsfläche des Einkoppelbereichs des Trägermediums wieder eingekoppelt und an die Sensoreinrichtung übermittelt wird. Hierdurch werden verschiedene Ausgestaltungsformen des ausgesendeten gepulsten Lichts möglich und folglich verschiedene Gestaltungen der Erfassungsvorrichtung. Letztendlich kann hierdurch zuverlässig das Sprachsignal der Person bereitgestellt werden, da ein zuverlässiger Übertragungsweg des Lichts von der Lichtquelle zu dem vorderen Halsbereich der Person sowie des reflektierten Lichts von dem vorderen Halsbereich der Person zu der Sensoreinrichtung ermöglicht wird.

In einer weiteren Ausgestaltungsform der Erfindung ist es vorgesehen, dass die Erfassungsvorrichtung eine Mikrofoneinrichtung umfasst. Die Erfassungsvorrichtung kann also einen Schallwandler umfassen, der Luftschall als Schallwechseldruckschwingungen in entsprechende elektrische Spannungsänderungen, das heißt entsprechende Mikrofonsignale, umwandelt. Eine derartige Mikrofoneinrichtung kann beispielsweise bereits in einem Kraftfahrzeug vorgesehen sein, beispielsweise für eine Spracherkennungseinrichtung zur Sprachsteuerung von Fahrzeugfunktionen. Die Mikrofoneinrichtung ist dazu ausgelegt, Sprachdaten der Person zu erfassen und der Auswerteeinrichtung bereitzustellen. Die Auswerteeinrichtung wiederum ist dazu ausgelegt, unter Anwendung eines Gewichtungskriteriums auf die bereitgestellten Schwingungsdaten und Sprachdaten Ausgangsdaten für die Interpretationseinheit der Auswerteeinrichtung bereitzustellen. Es wird also ein Abgleich zwischen den von der Mikrofoneinrichtung erfassten Sensordaten und den, wie bereits oben beschrieben, von der Sensoreinrichtung der Erfassungsvorrichtung bereitgestellten Sensordaten, aus denen die Umwandlungseinheit die Schwingungsdaten bestimmt hat, durchgeführt. Das Gewichtungskriterium kann beispielsweise abhängig von einem aktuellen Fahrzustand und/oder einem Frequenzbereich der Sprachdaten erfassen, ob es sich bei den Sprachdaten um mit der sprechenden Person des Fahrer korrelierte Daten handelt. Gegebenenfalls kann zudem mittels des Gewichtungskriteriums verhindert werden, dass Hintergrundgeräusche einen starken Einfluss auf die Ausgangsdaten und somit letztendlich auf die Qualität des bereitgestellten Sprachsignals ausüben. Die der Interpretationseinheit bereitgestellten Ausgangsdaten werden nämlich derart ausgewertet, sodass unter Anwendung des Sprachinterpretationskriteriums das Sprachsignal der Person bereitgestellt wird. Die mittels der Umwandlungseinheit bereitgestellten Schwingungsdaten werden also letztendlich herangezogen, um im Zusammenspiel mit den Sprachdaten des Mikrofons die Geräusche im Kraftfahrzeug zu analysieren und die darin enthaltene Sprache zu extrahieren und aufzubereiten.

Es kann beispielsweise vorgesehen sein, dass die Sprachdaten des Mikrofons mit Hilfe der Schwingungsdaten durch Anwenden des Gewichtungskriteriums dahingehend optimiert werden, dass ein möglichst reines und hintergrundgeräuscharmes Sprachsignal bereitgestellt wird. Hierdurch wird letztendlich das bereitgestellte Sprachsignal der Person optimiert, sodass dieses besonders zuverlässig die tatsächliche gesprochene Sprache der Person wiedergibt.

Die Erfindung sieht außerdem vor, dass die Erfassungsvorrichtung eine Bilderfassungseinrichtung umfasst. Die Bilderfassungseinrichtung ist beispielsweise als Bildsensor oder Kamerasensor ausgebildet, beispielsweise als CCD-Sensor (charged coupled device - ladungsgekoppelte Vorrichtung) oder als CMOS-Sensor (complementary metal oxide semi conductor - komplementärer Metalloxidhalbleiter). Die Bilderfassungseinrichtung ist dazu ausgebildet, Umgebungslicht, das aus der Umgebung auf den Einkoppelbereich trifft, von dem ersten flächigen Trägermedium zum Auskoppelbereich übertragen und am Auskoppelbereich ausgekoppelt wird, zu erfassen und in Form von Bilddaten, die mit dem erfassten Umgebungslicht korrelieren, der Auswerteeinrichtung bereitzustellen. Bei einer derartigen Ausgestaltung der Bilderfassungseinrichtung als Bildsensor kann das erste flächige Trägermedium, an dem der Einkoppelbereich und der Auskoppelbereich angeordnet sind, zusätzlich die Aufgabe eines Objektivs, also einer abbildenden Optik übernehmen. Alternativ dazu kann die Bilderfassungseinrichtung als Kamera oder Fotoapparat, insbesondere als Mikrokamera, ausgebildet sein und folglich mit einer eigenen abbildenden Optik realisiert sein. Die Bilddaten, die mit dem erfassten Umgebungsbild korrelieren, enthalten beispielsweise Bildinformationen zu dem Fahrer, der bei der oben beschriebenen bevorzugten Einbaulage im Kraftfahrzeug vor der Erfassungsvorrichtung sitzt.

Die Auswerteeinrichtung ist dazu ausgelegt, unter Anwendung eines Abgleichkriteriums auf die bereitgestellten Schwingungsdaten und Bilddaten Ausgangsdaten für die Interpretationseinheit bereitzustellen. Die Bilddaten enthalten nämlich beispielsweise Informationen zu einer aktuellen Ausrichtung der vorderen Halsregion beziehungsweise des Kopfs des Fahrers relativ zu einer vorgegebenen Normalausrichtung, in der der Fahrer geradeaus in Fahrzeuglängsrichtung durch die Windschutzscheibe blickt. Bewegt der Fahrer nun seinen Kopf beispielsweise relativ zur Windschutzscheibe nach vorne oder nach hinten oder neigt diesen relativ zu der beschriebenen Normalanordnung, kann dies anhand der Bilddaten erfasst werden. Eine dadurch bewirkte Auswirkung auf die Schwingungsdaten kann somit mithilfe des Abgleichkriteriums derart korrigiert werden, dass die Ausgangsdaten eine zuverlässige Beschreibung der tatsächlichen Schwingung der vorderen Halsregion der Person umfassen und nicht beispielsweise durch relativ zu diesen Schwingungen langsam verlaufende Bewegungen des Fahrers beeinflusst werden. Die Interpretationseinheit ist nun dazu ausgebildet, durch Auswerten der Ausgangsdaten und Anwendung des Sprachinterpretationskriteriums das Sprachsignal der Person bereitzustellen. Die Bewegung des Fahrers unabhängig von dessen Bewegung in der vorderen Halsregion während des Sprechend des Fahrers kann folglich berücksichtigt werden, sodass stets zuverlässig das Sprachsignal der Person bereitgestellt werden kann, ohne dass dieses Signal durch Relativbewegungen eines Kopf- und Halsbereichs des Fahrers relativ zur Erfassungsvorrichtung die Qualität des Sprachsignals beeinflussen können.

Erfindungsgemäß ist es vorgesehen, dass das flächige Trägermedium zwischen dem Einkoppelbereich und dem Auskoppelbereich als transparente Platte, Folie oder Lack ausgebildet ist. Das flächige Trägermedium kann also mit einer kleinen Dicke ausgebildet sein, sodass die Breite und Länge des flächigen Trägermediums im Vergleich zu dieser kleinen Dicke des Trägermediums, die senkrecht zur flächigen Oberfläche des flächigen Trägermediums steht, groß ist. Das flächige Trägermedium kann beispielsweise zwischen einem halben Millimeter und fünf Millimeter dick sein. Falls das flächige Trägermedium als transparente Folie ausgebildet ist, ist es außerdem biegbar ausgebildet, das heißt es kann zerstörungsfrei verformt werden, wobei als zerstörungsfreies Verformen ein zerstörungsfreies Verbiegen der Folie um einen Biegeradius von kleiner als zwei Zentimetern verstanden wird. Falls das flächige Trägermedium als transparenter Lack ausgebildet ist, kann es eine Dicke im Mikrometerbereich und folglich kleiner als einen Millimeter aufweisen. Hierdurch wird erreicht, dass das flächige Trägermedium mit dem Einkoppelbereich und dem Auskoppelbereich an zahlreichen Positionen, beispielsweise innerhalb eines Kraftfahrzeugs oder an einer Wand, unauffällig angeordnet sein kann, ohne dort beispielsweise ein dahinter angeordnetes Objekt zu verdecken, sodass beispielsweise eine Anordnung auf einer Fensterscheibe des Kraftfahrzeugs denkbar ist. Hierdurch wird die Erfassungsvorrichtung in eine beliebige Umgebung integrierbar.

In einer weiteren Ausgestaltungsform der Erfindung ist es vorgesehen, dass der Einkoppelbereich und der Auskoppelbereich einstückig mit dem Trägermedium ausgebildet sind oder das Trägermedium als separates Element zu dem Einkoppelbereich und dem Einkoppelbereich ausgebildet ist. Im ersten Fall können der Einkoppelbereich und der Auskoppelbereich somit beispielsweise direkt an einer Oberfläche des Trägermediums eingearbeitet sein. Das heißt die Ablenkstruktur kann beispielsweise in die Oberfläche des Trägermediums geätzt oder gelasert sein. Somit kann das Trägermedium selbst als HOE ausgebildet sein. Im zweiten Fall können Einkoppelbereich, Auskoppelbereich und Trägermedium separat ausgebildet sein. Dabei können der Einkoppelbereich und der Auskoppelbereich beispielsweise wenigstens ein erstes Element bilden, und das Trägermedium kann ein zweites Element bilden, das an dem ersten Element anliegt. Somit können der Einkoppelbereich und der Auskoppelbereich in wenigstens einem HOE ausgebildet sein. Beispielsweise können der Einkoppelbereich und der Auskoppelbereich in unterschiedlichen Abschnitten einer holografischen Folie oder Platte ausgebildet sein. Zum Befestigen der Folie oder Platte an dem Trägermedium kann die Folie der Platte an das Trägermedium angeklebt sein. Alternativ kann die holografische Folie auch als Adhäsionsfolie ausgebildet sein und direkt, also ohne Klebstoff, durch molekulare Kräfte an der Oberfläche des Trägermediums haften. Die Erfassungseinrichtung mit dem Trägermedium und dem daran angeordneten Einkoppelbereich und Auskoppelbereich kann somit auf verschiedene Arten und insbesondere kostengünstig hergestellt sein.

Das erfindungsgemäße Kraftfahrzeug umfasst eine Erfassungsvorrichtung, wie sie oben beschrieben wurde. Hierbei ist das erste flächige Trägermedium mit dem Einkoppelbereich und dem Auskoppelbereich an einer von folgenden Positionen im Kraftfahrzeug angeordnet: in einem Bildschirm einer Anzeigevorrichtung im Fahrzeuginnenraum, in einem Rückspiegel, in einer Mittelkonsole, in einem Armaturenbrett, in einem Kombinationsinstrument, in einer Windschutzscheibe, in einem Seitenfenster und/oder zwischen zwei A-Säulen des Kraftfahrzeugs. Hierbei kann jeweils das erste flächige Trägermedium auf einer Oberfläche der genannten Komponente des Kraftfahrzeugs angeordnet sein, insbesondere dann, wenn das erste flächige Trägermedium als transparentes Trägermedium ausgebildet ist, beispielsweise als Folie, Deckplatte oder Lack. Hierdurch wird ermöglicht, dass sich die Erfassungsvorrichtung zum Messen in mindestens zwei Richtungen verwenden lässt, und zwar nach innen in den Innenraum des Kraftfahrzeugs hin, das heißt beispielsweise zum Fahrer des Kraftfahrzeugs hin, aber auch nach außen in Richtung einer Umgebung des Kraftfahrzeugs. Hierdurch kann beispielsweise das Sprachsignal einer außerhalb des Kraftfahrzeugs stehenden Person, deren Schwingungen im vorderen Halsbereich mittels der Erfassungsvorrichtung erfasst und in Form des Sprachsignals dieser Person bereitgestellt werden, zum Beispiel mittels einer Ausgabeeinrichtung im Kraftfahrzeuginneren ausgegeben werden, sodass beispielsweise der Fahrer des Kraftfahrzeugs, ohne ein Fenster des Kraftfahrzeugs dafür öffnen zu müssen, hören kann, was diese Person, die sich außerhalb des Kraftfahrzeugs befindet, zu einem aktuellen Zeitpunkt sagt. Hierfür kann das erste flächige Trägermedium beispielsweise an einer Außenseite der Windschutzscheibe oder zumindest einem der Seitenfenster des Kraftfahrzeugs angeordnet sein. Relevant ist letztendlich nur, dass das erst flächige Trägermedium derart innerhalb oder an der Außenwand des Kraftfahrzeugs positioniert ist, dass erreicht wird, dass das Licht der Lichtquelle derart ausgesendet werden kann, dass es auf die Person, insbesondere auf die vordere Halsregion der Person, auftrifft, und dass außerdem das reflektierte Licht auf den Einkoppelbereich des ersten flächigen Trägermediums trifft, sodass die Erfassungsvorrichtung letztendlich in der oben beschriebenen bevorzugten Einbaulage angeordnet ist. Letztendlich ist die Erfassungsvorrichtung an verschiedenen Positionen innerhalb eines Kraftfahrzeugs und außerdem für die verschiedenen genannten Zwecke einsetzbar.

Zu der Erfindung gehören auch Ausführungsformen des erfindungsgemäßen Kraftfahrzeugs, die Merkmale aufweisen, wie sie bereits im Zusammenhang mit den Weiterbildungen der erfindungsgemäßen Erfassungsvorrichtung beschrieben worden sind. Aus diesem Grund sind die entsprechenden Weiterbildungen des erfindungsgemäßen Kraftfahrzeugs hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

In einer vorteilhaften Ausgestaltungsform des erfindungsgemäßen Kraftfahrzeugs ist es vorgesehen, dass das Kraftfahrzeug zumindest eine Erfassungseinrichtung umfasst, insbesondere eine Kameraeinrichtung, eine Beschleunigungserfassungseinrichtung und/oder eine Drehratenerfassungseinrichtung. Eine Drehratenerfassungseinrichtung wird teilweise auch als Gyroskop bezeichnet. Die zumindest eine Erfassungseinrichtung ist dazu ausgebildet, von ihr erfasste Erfassungsdaten für die Auswerteeinrichtung der Erfassungsvorrichtung bereitzustellen. Die Auswerteeinrichtung der Erfassungsvorrichtung ist nun dazu ausgelegt, die Erfassungsdaten der Erfassungseinrichtung des Kraftfahrzeugs zum Erzeugen des Sprachsignals der Person mittels der Interpretationseinheit auszuwerten. Mittels der Erfassungseinrichtung können nämlich weitere Parameter erfasst werden, die beispielsweise eine aktuelle Bewegung des Kraftfahrzeugs beschreiben.

Beispielsweise kann es während einer Fahrt des Kraftfahrzeugs dazu kommen, dass der Fahrer aufgrund von Trägheitserscheinungen eine bestimmte Relativbewegung relativ zum Bezugssystem des Kraftfahrzeugs durchführt, die letztendlich einen Einfluss auf die Sensordaten und somit auf die Schwingungsdaten, basierend auf denen das Sprachsignal ermittelt wird, haben. Daher werden mittels der Erfassungseinrichtung zusätzliche Daten betreffend die Bewegung des Kraftfahrzeugs und/oder die Bewegung der Insassen, wie es beispielsweise mittels der Kameraeinrichtung der Fall ist, herangezogen, um letztendlich mithilfe der Erfassungsdaten beim Erzeugen der Sprachsignale eine Reduzierung von Fehlerquellen zu ermöglichen. Dies hat den Vorteil, dass ein zuverlässiges Sprachsignal der Person ausgewertet werden kann. Informationen über die Bewegung des Kraftfahrzeugs selbst, und insbesondere über Trägheitskräfte innerhalb des Kraftfahrzeugs könne mit der Beschleunigungserfassungseinrichtung und/oder der Drehratenerfassungseinrichtung erfasst werden, wobei mittels der Drehratenerfassungseinrichtung erfasst wird, mit welcher Drehbewegung sich das Kraftfahrzeug beispielsweise um eine eigene Achse dreht.

Das erfindungsgemäße Verfahren ist dazu ausgebildet, ein Sprachsignal einer Person mit einer Erfassungsvorrichtung zu erfassen, wobei die Erfassungsvorrichtung eine Lichtquelle, eine Sensoreinrichtung, eine Auswerterichtung, die eine Umwandlungseinheit und eine Interpretationseinheit aufweist, sowie ein erstes flächiges Trägermedium umfasst. Das erste flächige Trägermedium ist als Lichtleiter ausgebildet, an dem ein Einkoppelbereich, der als holografisches Element mit einer ersten Ablenkstruktur ausgebildet ist, und ein Auskoppelbereich, der als holografisches Element mit einer zweiten Ablenkstruktur ausgebildet ist, bereitgestellt sind. Das erste flächige Trägermedium mit dem Einkoppelbereich und dem Auskoppelbereich ist als eine transparente Platte, Folie oder Lack ausgebildet und der Einkoppelbereich und der Auskoppelbereich weisen als jeweilige Ablenkstruktur zumindest ein holografisches Volumengitter oder ein holografisches Oberflächengitter auf.

Das erfindungsgemäße Verfahren umfasst folgende Schritte: Aussenden von gepulstem Licht mittels der Lichtquelle in eine Richtung einer vorderen Halsregion der Person; Einkoppeln von Lichter, das von der Lichtquelle ausgesendet und an der vorderen Halsregion der Person reflektierte wird, mittels der ersten Ablenkstruktur; Übertragen des eingekoppelten reflektierten Lichts mittels interner Reflexion von dem Einkoppelbereich an den Auskoppelbereich mittels des ersten flächigen Trägermediums; Auskoppeln des übertragene reflektierte Licht, das auf die zweite Ablenkstruktur fällt, aus dem ersten flächigen Trägermedium mittels der zweiten Ablenkstruktur; Erfassen des im Auskoppelbereich ausgekoppelten Lichts und Bereitstellen von Sensordaten, die eine Laufzeitdauer des von der Lichtquelle ausgesendeten und an der vorderen Halsregion der Person reflektierten gepulsten Lichts beschreiben, mittels der Sensoreinrichtung; Umwandeln der Sensordaten in Schwingungsdaten, die eine Relativbewegung der vorderen Halsregion der Person beschreiben, mittels der Umwandlungseinheit der Auswerteeinrichtung und Bereitstellen des Sprachsignals der Person mittels der Interpretationseinheit der Auswerteeinrichtung durch Auswerten der Schwingungsdaten unter Anwendung eines Sprachinterpretationskriteriums auf die Schwingungsdaten.

Die Erfassungsvorrichtung umfasst eine Bilderfassungseinrichtung, die Umgebungslicht, das aus der Umgebung auf den Einkoppelbereich trifft, von dem ersten flächigen Trägermedium zum Auskoppelbereich übertragen und am Auskoppelbereich ausgekoppelt wird, erfasst und in Form von Bilddaten, die mit dem erfassten Umgebungslicht korrelieren, der Auswerteeinrichtung bereitstellt. Die Auswerteeinrichtung stellt unter Anwendung eines Abgleichkriteriums auf die bereitgestellten Schwingungsdaten und Bilddaten Ausgangsdaten für die Interpretationseinheit bereit und durch deren Auswerten unter Anwendung des Sprachinterpretationskriteriums das Sprachsignal der Person.

Die im Zusammenhang mit der erfindungsgemäßen Erfassungsvorrichtung vorgestellten bevorzugten Ausgestaltungen und deren Vorteile gelten entsprechend, soweit anwendbar, für das erfindungsgemäße Verfahren. Aus diesem Grund sind die entsprechenden Weiterbildungen des erfindungsgemäßen Verfahrens hier nicht noch einmal beschrieben.

Zu der Erfindung gehören auch eine Steuervorrichtung für die Erfassungsvorrichtung, wobei die Steuervorrichtung dazu ausgelegt ist, das erfindungsgemäße Verfahren, das mittels der Erfassungsvorrichtung durchgeführt wird, durchzuführen. Diese Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung einen Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung eines Kraftfahrzeugs mit einer Erfassungsvorrichtung;
- Fig. 2: eine schematische Darstellung einer Erfassungsvorrichtung mit einem ersten flächigen Trägermedium; und
- Fig. 3: eine schematische Darstellung einer Erfassungsvorrichtung mit einem gemeinsamen Hauptträgermedium.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

**In** den Figuren bezeichnen gleiche Bezugszeichen jeweils funktionsgleiche Elemente.

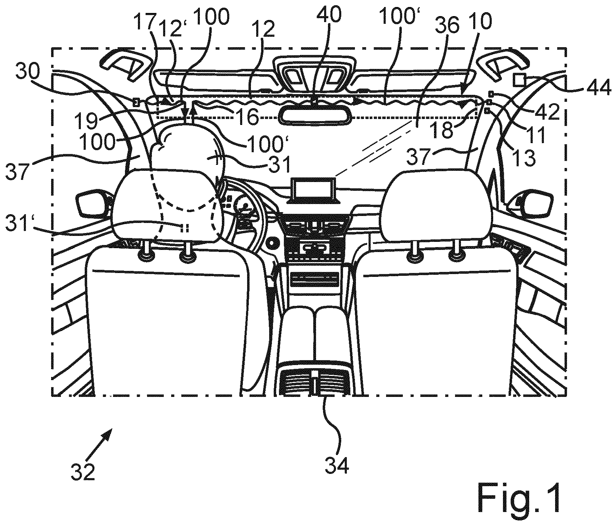

**In** Fig. 1 ist eine Erfassungsvorrichtung 10 für ein Sprachsignal einer Person 31 skizziert. Diese Erfassungsvorrichtung 10 ist in einem Kraftfahrzeug 32 angeordnet, und zwar in einem Fahrzeuginnenraum 34 des Kraftfahrzeugs 32.

Die Erfassungsvorrichtung 10 umfasst eine Lichtquelle 30 die als Infrarotlichtquelle ausgebildet ist. Die Lichtquelle 30 ist dazu ausgelegt, gepulstes Licht 100 auszusenden. Die Erfassungsvorrichtung 10 umfasst zudem eine Sensoreinrichtung 11, die als LIDAR-Sensor ausgebildet ist. Die Erfassungsvorrichtung 10 umfasst außerdem eine Auswerteeinrichtung 13. Die Erfassungsvorrichtung 10 umfasst zudem ein erstes flächiges Trägermedium 12, das als Lichtleiter ausgebildet ist. Zudem umfasst die Erfassungsvorrichtung 10 ein zweites flächiges Trägermedium 12', das seitlich des ersten flächigen Trägermediums 12 in einem oberen Bereich einer Windschutzscheibe 36 des Kraftfahrzeugs 32 positioniert ist. Die beiden flächigen Trägermedien 12, 12' sind also zwischen zwei A-Säulen 37 des Kraftfahrzeugs 32 angeordnet.

Sowohl das erste flächige Trägermedium 12 als auch das zweite flächige Trägermedium 12' können jeweils als transparente Platte, Folie oder Lack ausgebildet. In diesem Beispiel sind sie jeweils als transparente Folie ausgebildet, die jeweils auf einer Innenseite der Windschutzscheibe 36 angeordnet ist. In Fig. 1 wird deutlich, dass von der Lichtquelle 30 ausgesendetes gepulstes Licht 100 in einem Lichteinkoppelbereich 17 in das zweite flächige Trägermedium 12' eingekoppelt und in einem Lichtauskoppelbereich 19 des zweiten flächigen Trägermediums 12' derart in die Richtung der Person 31 ausgesendet wird, dass dieses auf eine vordere Halsregion 31' der Person 31 trifft. Dort wird dieses gepulste Licht 100 reflektiert, sodass das reflektierte Licht 100' zurück in Richtung der Windschutzscheibe 36 ausgesendet wird. Dort wird in einem Einkoppelbereich 16 das reflektierte Licht 100' in das erst flächige Trägermedium 12 eingekoppelt und zu einem Auskoppelbereich 18 übertragen, an dem die Sensoreinrichtung 11 anliegt. Der Einkoppelbereich 16 und der Auskoppelbereich 18 sind also am ersten flächigen Trägermedium 12 bereitgestellt, wohingegen der Lichteinkoppelbereich 17 und der Lichtauskoppelbereich 19 am zweiten flächigen Trägermedium 12' bereitgestellt sind.

Die Erfassungsvorrichtung 10 umfasst zudem eine Auswerteeinrichtung 13, eine Mikrofoneinrichtung 40, eine Bilderfassungseinrichtung 42 sowie eine Erfassungseinrichtung 44, wobei es sich bei der Erfassungseinrichtung 44 in diesem Beispiel um eine Beschleunigungserfassungseinrichtung handelt, die eine Beschleunigung des Kraftfahrzeugs 32 erfasst. Alternativ dazu kann es sich bei der Erfassungseinrichtung 44 um eine Kameraeinrichtung und/oder um eine Drehratenerfassungseinrichtung handeln. Die Erfassungseinrichtung 44 ist also dazu ausgebildet, eine Bewegung des Kraftfahrzeugs 32 und/oder der Person 31 im Kraftfahrzeug 32 zu erfassen und in Form von entsprechenden Erfassungsdaten bereitzustellen.

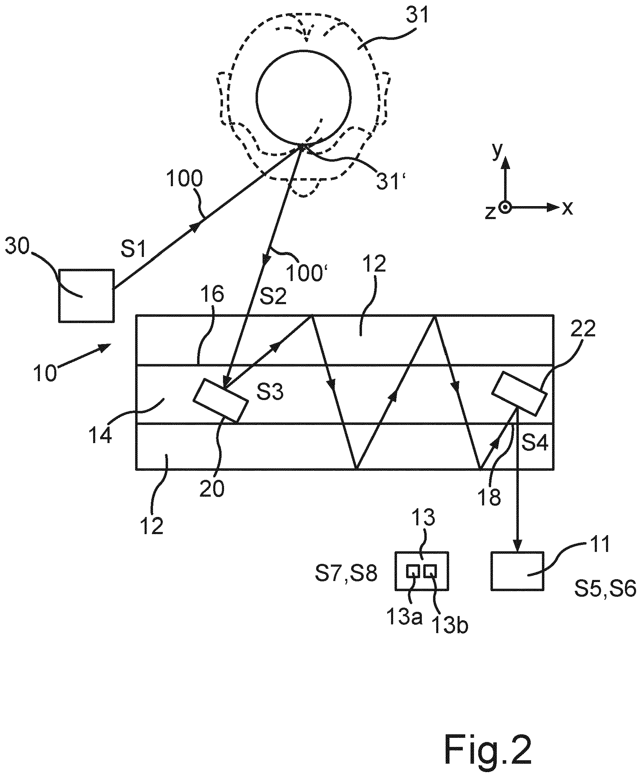

In Fig. 2 ist detailliert skizziert, wie mit Hilfe der Erfassungsvorrichtung 10 das Sprachsignal der Person 31 bereitgestellt werden kann. Hierbei wird deutlich, dass der Einkoppelbereich 16 als holografisches Element 14 mit einer ersten Ablenkstruktur 20 ausgebildet ist. Die erste Ablenkstruktur 20 ist dazu ausgelegt, das Licht 100', das von der Lichtquelle 30 ausgesendet und an der Person 31, und zwar an der vorderen Halsregion 31' der Person 31, reflektiert wurde, in das erste flächige Trägermedium 12 einzukoppeln. Das erst flächige Trägermedium 12 ist nun dazu ausgebildet, das eingekoppelte reflektierte Licht 100' mittels interner Reflektion von dem Einkoppelbereich 16 an den Auskoppelbereich 18 zu übertragen. Der Einkoppelbereich 16 ist ebenfalls als holografisches Element 14 jedoch mit einer zweiten Ablenkstruktur 22 ausgebildet. Die zweite Ablenkstruktur 22 ist dazu ausgelegt, das übertragene reflektiert Licht 100', das auf die zweite Ablenkstruktur 22 fällt, aus dem ersten flächigen Trägermedium 12 auszukoppeln. Der Einkoppelbereich 16 und der Auskoppelbereich 18 weisen als jeweilige Ablenkstrukturen 20, 22 zumindest ein optisches Gitter, insbesondere ein holografisches Volumengitter oder ein holografisches Oberflächengitter auf.

Die Sensoreinrichtung 11 ist dazu ausgebildet, das im Auskoppelbereich 18 ausgekoppelte Licht 100' zu erfassen und in Form von Sensordaten bereitzustellen. Die Sensordaten beschreiben eine Laufzeit des von einer Lichtquelle 30 ausgesendeten und an der Person 31 reflektierten gepulsten Lichts 100', das von der Sensoreinrichtung 11 erfasst wurde. Die Sensoreinrichtung 11 ist also eine Art LIDAR-Gerät, das die Laufzeit des Lichts 100' erfassen und bereitstellen kann. Die Auswerteeinrichtung 13 umfasst eine Umwandlungseinheit 13a sowie eine Interpretationseinheit 13b. Die Auswerteeinrichtung 13 ist dazu ausgebildet, mittels der Umwandlungseinheit 13a die Sensordaten in Schwingungsdaten umzuwandeln und mittels der Interpretationseinheit 13b durch Auswerten der Schwingungsdaten unter Anwendung eines Sprachinterpretationskriteriums das Sprachsignal der Person 31 bereitzustellen. Beim Auswerten der Schwingungsdaten unter Anwendung des Sprachinterpretationskriteriums werden die bereitgestellten Schwingungsdaten mit in der Interpretationseinheit 13b hinterlegten Referenzschwingmustern abgeglichen, wobei die jeweiligen hinterlegten Referenzschwingmuster jeweiligen Sprachsignalen zugeordnet sind.

Zum Erfassen des Sprachsignals der Person 31 erfolgen folglich folgende Schritte: In einem Schritt S1 wird mittels der Lichtquelle 30 gepulstes Licht 100 ausgesendet. In einem Schritt S2 wird das von der Lichtquelle 30 ausgesendet und an der Person 31 reflektierte Licht 100' mittels der ersten Ablenkstruktur 20 in das erste flächige Trägermedium 12 eingekoppelt. Daraufhin erfolgt in einem Schritt S3 das Übertragen des eingekoppelten reflektierten Lichts 100' mittels interner Reflexion von dem Einkoppelbereich 16 an den Auskoppelbereich 18 mittels des ersten flächigen Trägermediums 12. Daraufhin wird in einem Schritt S4 das übertragene reflektierte Licht 100', das auf die zweite Ablenkstruktur 22 fällt, aus dem ersten flächigen Trägermedium 12 mittels der zweiten Ablenkstruktur 22 ausgekoppelt. Anschließend wird das im Auskoppelbereich 18 ausgekoppelte Licht 100' von der Sensoreinrichtung 11 in einem Schritt S5 erfasst, woraufhin in einem Schritt S6 mittels der Sensoreinrichtung 11 Sensordaten, die die Laufzeit des von der Lichtquelle 30 ausgesendeten und von der Person 31 reflektierten gepulsten Lichts 100' beschreiben, bereitgestellt werden. In einem nächsten Schritt S7 werden die Sensordaten in Schwingungsdaten umgewandelt, und zwar mittels der Umwandlungseinheit 13a der Auswerteeinrichtung 13. **In** einem Schritt S8 wird schließlich das Sprachsignal der Person 31 mittels der Interpretationseinheit 13b bereitgestellt, und zwar durch Auswerten der Schwingungsdaten unter Anwendung der Sprachinterpretationskriteriums auf die Schwingungsdaten. Hierbei wird berücksichtigt, dass die Lichtquelle 30 das Licht 100 derart aussendet, dass dieses in Richtung der vorderen Halsregion 31' der Person 31 ausgesendet und dort reflektiert wird. Das reflektierte Licht 100' enthält also Informationen über Schwingungen in einem Kehlkopfbereich der Person 31, wie sie bei einer sprechenden Person 31 zu erwarten sind und folglich gemessen und ausgewertet werden können.

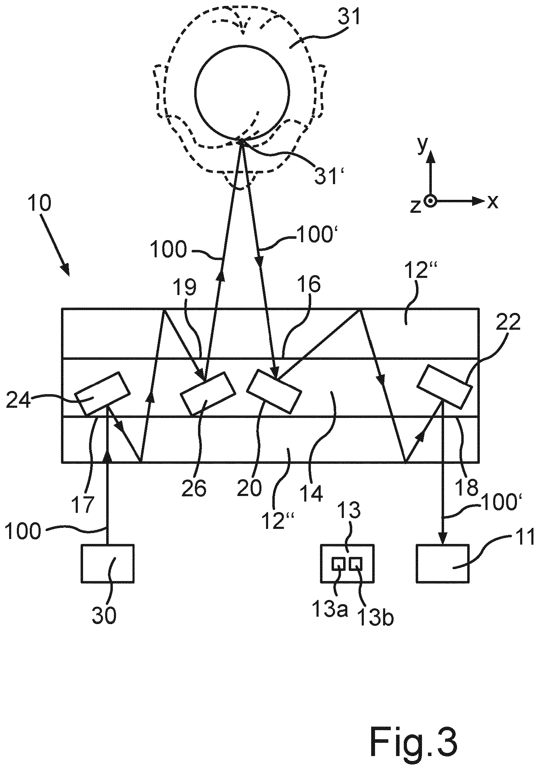

In Fig. 3 ist anstelle des ersten flächigen Trägermediums 12 ein gemeinsames Hauptträgermedium 12" skizziert, das sowohl das erste flächige Trägermedium 12 als auch das zweite flächige Trägermedium 12' umfasst. An dem gemeinsamen Hauptträgermedium 12' sind daher der Einkoppelbereich 16 und der Auskoppelbereich 18 sowie der Lichteinkoppelbereich 17 und der Lichtauskoppelbereich 19 bereitgestellt. In Fig. 1 waren das erst flächige Trägermedium 12 und das zweite flächige Trägermedium 12' getrennt voneinander dargestellt, sodass am ersten flächigen Trägermedium 12 der Einkoppelbereich 16 und der Auskoppelbereich 18 bereitgestellt sind und am zweiten flächigen Trägermedium 12' der Lichteinkoppelbereich 17 und der Lichtauskoppelbereich 19.

Der Lichteinkoppelbereich 17 ist als holografisches Element 14 mit einer dritten Ablenkstruktur 24 ausgebildet, wie es in Fig. 3 skizziert ist. Die dritte Ablenkstruktur 24 ist dazu ausgebildet, Licht 100, das von der Lichtquelle 30 der Erfassungsvorrichtung 10 auf die dritte Ablenkstruktur 24 fällt, in das Hauptträgermedium 12" einzukoppeln. Falls alternativ zu dem Hauptträgermedium 12" ein separates zweites flächiges Trägermedium 12' von der Erfassungsvorrichtung 10 umfasst wird, wird von der dritten Ablenkstruktur 24 das Licht 100 der Lichtquelle 30 in das zweite flächige Trägermedium 12' eingekoppelt. Das Hauptträgermedium 12" ist nun dazu ausgebildet, das eingekoppelte Licht 100 mittels interner Reflexion von dem Lichteinkoppelbereich 17 an den Lichtauskoppelbereich 19 zu übertragen. Der Lichtauskoppelbereich 19 ist ebenfalls als holografisches optisches Element 14 mit einer vierten Ablenkstruktur 26 ausgebildet. Die vierte Ablenkstruktur 26 ist dazu ausgelegt, das übertragene Licht 100 das auf die vierte Ablenkstruktur 26 fällt, aus dem Hauptträgermedium 12" (beziehungsweise aus dem zweiten Trägermedium 12') auszukoppeln und in Richtung der Person 31, insbesondere der vorderen Halsregion 31' der Person 31, auszusenden. Der Weg des reflektierten Lichts 100' erfolgt daraufhin analog wie in Fig. 2 beschrieben.

Die Mikrofoneinrichtung 40 der Erfassungsvorrichtung 10, die in Fig. 1 skizziert ist, ist dazu ausgelegt, Sprachdaten der Person 31 zu erfassen und der Auswerteeinrichtung 13 bereitzustellen. Die Auswerteeinrichtung 13 ist nun dazu ausgelegt, unter Anwendung eines Gewichtungskriteriums auf die bereitgestellten Schwingungsdaten und Sprachdaten Ausgangsdaten für die Interpretationseinheit 13b bereitzustellen und durch deren Auswerten oder Anwendung des Sprachinterpretationskriteriums das Sprachsignal der Person 31 breitzustellen.

Die Bilderfassungseinrichtung 42 der Erfassungsvorrichtung 10, die ebenfalls in Fig. Skizziert ist, ist dazu ausgebildet, Umgebungslicht, das aus der Umgebung auf den Einkoppelbereich 16 trifft, durch das erste flächige Trägermedium 12 zum Auskoppelbereich 18 übertragen und am Auskoppelbereich 18 ausgekoppelt wird, zu erfassen und in Form von Bilddaten, die mit dem erfassten Umgebungslicht korrelieren, der Auswerteeinrichtung 13 bereitzustellen. Die Auswerteeinrichtung 13 ist dazu ausgelegt, unter Anwendung eines Abgleichkriteriums auf die bereitgestellten Schwingungsdaten und Bilddaten Ausgangsdaten für die Interpretationseinheit 13b bereitzustellen und durch deren Auswerten unter Anwendung des Sprachinterpretationskriteriums das Sprachsignal der Person 31 bereitzustellen.

Die ebenfalls in Fig. 1 skizzierte Erfassungseinrichtung 44, das heißt in diesem Beispiel die Beschleunigungserfassungseinrichtung, ist dazu ausgebildet, von ihr erfasste Erfassungsdaten für die Auswerteeinrichtung 13 bereitzustellen. Die Auswerteeinrichtung 13 ist dazu ausgelegt, die Erfassungsdaten zum Erzeugen des Sprachsignals der Person 31 mittels der Interpretationseinheit 13b auszuwerten. Hierbei kann beispielsweise eine Beschleunigung des Kraftfahrzeugs 32 berücksichtigt werden, aufgrund der die Person 31 auch in der vorderen Halsregion 31' eine vorgegebenen Relativbewegung zum Kraftfahrzeug 32 durchführt, die eventuell die Sensordaten, die von der Sensoreinrichtung 11 bereitgestellt werden, beeinflussen. Unter Berücksichtigung dieser Beschleunigungsdaten des Kraftfahrzeugs 32 können somit mögliche Fehler der ermittelten Schwingungsdaten korrigiert werden, sodass eine Qualität des Sprachsignals der Person 31 auch bei einer Fahrt des Kraftfahrzeugs 32 stets optimal ist.

Die Lichtquelle 30, die Auswerteeinrichtung 13, die Sensoreinrichtung 11 und die Bilderfassungseinrichtung 42 sind in dem in Fig. 1 skizzierten Kraftfahrzeug 32 jeweils in einer der zwei A-Säulen 37 des Kraftfahrzeugs 32 positioniert.

Alternativ zu der beschriebenen Position des ersten flächigen Trägermediums 12 sowie des zweiten flächigen Trägermediums 12' in der Windschutzscheibe 36 des Kraftfahrzeugs 32 kann das erste flächige Trägermedium 12 und/oder das zweite flächige Trägermedium 12' und/oder das gemeinsame Hauptträgermedium 12" in einem Bildschirm einer Anzeigevorrichtung im Fahrzeuginnenraum 34 des Kraftfahrzeugs 32 positioniert sein, in einem Rückspiegel, in einer Mittelkonsole, in einem Armaturenbrett, in einem Kombinationsinstrument und/oder in einem Seitenfenster.

Insgesamt zeigen die Beispiele, wie mittels der Erfindung eine Laserinterferometrie beispielsweise für ein Fahrzeuginnenraumtelefonat bereitgestellt werden kann. Hiermit wird also ein berührungsfreies Kehlkopfmikrofon für ein Kraftfahrzeug 32 bereitgestellt. Hierdurch wird letztendlich ermöglicht, dass ein optischer Entfernungsmesser mithilfe des ersten flächigen Trägermediums 12 mit dem Einkoppelbereich 16 und dem Auskoppelbereich 18, das heißt eines holografisch optisches Elements HOE, in eine Fensterscheibe des Kraftfahrzeugs 32 oder eine anderen Position im Kraftfahrzeug 32 integriert werden kann. Durch die beschriebene beispielhafte Integration in eine Fensterscheibe des Kraftfahrzeugs 32, und zwar in die Windschutzscheibe 36, lässt sich das Risiko einer Verdeckung des Erfassungsbereichs, beispielsweise durch eine Hand des Fahrers, reduzieren. Es lässt sich zusätzlich die Distanz zum zu messenden Objekt, der vorderen Halsregion 31' der Person 31 reduzieren, beispielsweise mittels einer Positionierung zumindest des ersten flächigen Trägermediums 12 in einem Seitenfenster des Kraftfahrzeugs 32. Außerdem kann die Erfassungsvorrichtung 10 in zwei Richtungen benutzt werden, und zwar nach innen zum Fahrzeuginnenraum 34 hin als auch nach außen hin in Richtung der Umgebung des Kraftfahrzeugs 32. Hierdurch kann beispielsweise das Sprachsignal von einer außerhalb des Kraftfahrzeugs 32 stehenden Person 31 in den Fahrzeuginnenraum 34 übermittelt werden, ohne dass das entsprechende Fenster geöffnet werden muss.

Die technische Umsetzung erfolgt mittels eines Emitters, das heißt mittels der Lichtquelle 30, die gepulstes Licht 100, das heißt zum Beispiel einen Laserstrahl als Messstrahl aussendet. Das ausgesendete Licht 100 wird in einen Lichtleiter eingekoppelt, der aus einem transparenten Trägermaterial, dem ersten flächigen Trägermedium 12, hergestellt ist. Das erste flächige Trägermedium 12 kann beispielsweise auf einer Fensterscheibe des Kraftfahrzeugs 32 aber auch beispielsweise auf einem Bildschirm eines mobilen Endgeräts oder auf einem anderen Gerät positioniert sein. Das emittierte Licht 100 wird also über eine holografische Funktion, das heißt über das zweite flächige Trägermedium 12' oder das gemeinsame Hauptträgermedium 12", eingekoppelt und an einen jeweiligen Bestimmungsort geleitet um dort über den Lichtauskoppelbereich 19 in Richtung der Person 31 ausgekoppelt zu werden. Die jeweilige Ein- und Auskopplung des Lichts 100 kann hierbei auf dem jeweiligen Trägermedium 12, 12' oder an dessen Rand erfolgen. Es kann jedoch mitten im Sichtfeld der Person 31 in deren Richtung ausgekoppelt werden, wo der Verbau der Lichtquelle 30 sowie der Sensoreinrichtung 11 aufgrund seiner physischen Präsenz nicht möglich wäre, da er beispielsweise nicht mittig auf der Windschutzscheibe 36 positionierbar ist, da diese transparent sein muss, damit die Person 31 durch die Windschutzscheibe 36 blicken kann. Der Aufnahmebereich, das heißt der Einkoppelbereich 16 ist bevorzugt flächig ausgeführt, wodurch letztendlich eine Sensorfläche der Sensoreinrichtung 11 vergrößert wird. Hierdurch können Ungenauigkeiten bei der Messung bis zu einem gewissen Maß ausgeglichen werden. Das von der vorderen Halsregion 31' des Person 31 reflektierte Licht 100' kann über dasselbe Hauptträgermedium 12" oder aber über das erste flächige Trägermedium 12 über den Einkoppelbereich 16 in diesen aufgenommen und zu der Sensoreinrichtung 11 übermittelt werden. Die Sensoreinrichtung 11 kann somit wie die Lichtquelle 30 versetzt von der eigentlichen Stelle angeordnet sein, an der das Licht 100 in Richtung der Person 31 ausgesendet sowie das reflektierte Licht 100' in das HOE eingekoppelt wird.

Mittels der von der Sensoreinrichtung 11 erfassten Sensordaten, lässt sich nun die Entfernung zu der Person 31 zurückrechnen und somit die Schwingung der vorderen Halsregion 31' bestimmen. Die so erhaltenen Schwingungsmuster werden anschließend herangezogen um zum Beispiel die von der Mikrofoneinrichtung 40 erfassten Geräusche zu analysieren, die darin erhaltene Sprache zu extrahieren und aufzubereiten. Es wird also anhand der Schwingungsdaten mittels der Interpretationseinheit 13b durch Auswerten der Schwingungsdaten unter Anwendung eines vorgegebenen Sprachinterpretationskriteriums das Sprachsignal der Person 31 aufbereitet und bereitgestellt.

Da das Kraftfahrzeug 32 ein bewegtes System ist und Trägheitseffekte dazu führen können, dass sich der Fahrer, also die Person 31, anders verhält als eine starre Karosserie des Kraftfahrzeugs 32 um ihn herum, können zusätzlich Informationen zur Bewegung des Kraftfahrzeugs 32 also zur Bewegung der Person 31 innerhalb des Kraftfahrzeugs 32 herangezogen werden. Diese Informationen werden mittels der Erfassungseinrichtung 44, das heißt mittels der Kameraeinrichtung der Beschleunigungserfassungseinrichtung und/oder der Drehratenerfassungseinrichtung, ermittelt. Anhand dieser Erfassungsdaten der Erfassungseinrichtung 44 kann die Bestimmung des Sprachsignals der Person 31 verbessert werden und zudem können Fehlerquellen für fehlerhafte Sprachsignale der Person 31 reduziert werden.

## Patentansprüche

1. Erfassungsvorrichtung (10) für ein Sprachsignal einer Person (31), wobei die Erfassungsvorrichtung (10) eine Lichtquelle (30), eine Sensoreinrichtung (11), eine Auswerteeinrichtung (13), die eine Umwandlungseinheit (13a) und eine Interpretationseinheit (13b) aufweist, sowie ein erstes flächiges Trägermedium (12) umfasst, wobei das erste flächige Trägermedium (12) als Lichtleiter ausgebildet ist, an dem ein Einkoppelbereich (16) und ein Auskoppelbereich (18) bereitgestellt sind, wobei das erste flächige Trägermedium (12) mit dem Einkoppelbereich (16) und dem Auskoppelbereich (18) als eine transparente Platte, Folie oder Lack ausgebildet ist,
wobei
- die Lichtquelle (30) dazu ausgebildet ist, gepulstes Licht (100) auszusenden;
- der Einkoppelbereich (16) als holografisches Element (14) mit einer ersten Ablenkstruktur (20) ausgebildet ist, die dazu ausgelegt ist, Licht (100'), das von der Lichtquelle (30) ausgesendet und an der Person (31) reflektiert wird, in das erste flächige Trägermedium (12) einzukoppeln;
- das erste flächige Trägermedium (12) dazu ausgebildet ist, das eingekoppelte reflektierte Licht (100') mittels interner Reflexion von dem Einkoppelbereich (16) an den Auskoppelbereich (18) zu übertragen;
- der Auskoppelbereich (18) als holografisches Element (14) mit einer zweiten Ablenkstruktur (22) ausgebildet ist, die dazu ausgelegt ist, das übertragene reflektierte Licht (100'), das auf die zweite Ablenkstruktur (22) fällt, aus dem ersten flächigen Trägermedium (12) auszukoppeln, wobei der Einkoppelbereich (16) und der Auskoppelbereich (18) als jeweilige Ablenkstruktur (20, 22) zumindest ein holografisches Volumengitter oder ein holografisches Oberflächengitter aufweisen;
- die Sensoreinrichtung (11) dazu ausgebildet ist, das im Auskoppelbereich (18) ausgekoppelte Licht (100') zu erfassen und in Form von Sensordaten bereitzustellen, die eine Laufzeitdauer des von der Lichtquelle (30) ausgesendeten und an der Person (31) reflektierten gepulsten Lichts (100') beschreiben; und
- die Auswerteeinrichtung (13) dazu ausgebildet ist, mittels der Umwandlungseinheit (13a) die Sensordaten in Schwingungsdaten umzuwandeln und mittels der Interpretationseinheit (13b) durch Auswerten der Schwingungsdaten unter Anwendung eines Sprachinterpretationskriteriums das Sprachsignal der Person (31) bereitzustellen, wobei das Sprachinterpretationskriterium jeweilige Schwingungsdaten enthält, die mit jeweiligen Sprachsignalkomponenten, aus denen sich das Sprachsignal der Person zusammensetzt, korreliert sind, sodass die Interpretationseinheit (13b) dazu ausgelegt ist, unter Hinzuziehen des Sprachinterpretationskriteriums die Schwingungsdaten derart auszuwerten, dass das Sprachsignal der Person (31) bereitstellbar ist,
wobei die Erfassungsvorrichtung (10) eine Bilderfassungseinrichtung (42) umfasst, die dazu ausgebildet ist, Umgebungslicht, das aus der Umgebung auf den Einkoppelbereich (16) trifft, von dem ersten flächigen Trägermedium (12) zum Auskoppelbereich (18) übertragen und am Auskoppelbereich (18) ausgekoppelt wird, zu erfassen und in Form von Bilddaten, die mit dem erfassten Umgebungslicht korrelieren, der Auswerteeinrichtung (13) bereitzustellen, wobei die Auswerteeinrichtung (13) dazu ausgelegt ist, unter Anwendung eines Abgleichkriteriums auf die bereitgestellten Schwingungsdaten und Bilddaten Ausgangsdaten für die Interpretationseinheit (13b) bereitzustellen und durch deren Auswerten unter Anwendung des Sprachinterpretationskriteriums das Sprachsignal der Person (31) bereitzustellen.

2. Erfassungsvorrichtung (10) nach dem vorhergehenden Anspruch, wobei beim Auswerten der Schwingungsdaten unter Anwendung des Sprachinterpretationskriteriums die bereitgestellten Schwingungsdaten mit in der Interpretationseinheit (13b) hinterlegten Referenzschwingmustern abgeglichen werden, wobei die jeweiligen hinterlegten Referenzschwingmuster jeweiligen Sprachsignalen zugeordnet sind.

3. Erfassungsvorrichtung (10) nach einem der vorhergehenden Ansprüche, wobei an einem zweiten flächigen Trägermedium (12') ein Lichteinkoppelbereich (17) und ein Lichtauskoppelbereich (19) bereitgestellt sind, wobei der Lichteinkoppelbereich (17) als holografisches Element (14) mit einer dritten Ablenkstruktur (24) ausgebildet ist, die dazu ausgelegt ist, Licht (100), das von der Lichtquelle (30) der Erfassungsvorrichtung (10) auf die dritte Ablenkstruktur (24) fällt, in das zweite flächige Trägermedium (12') einzukoppeln;
das zweite flächige Trägermedium (12') dazu ausgebildet ist, das eingekoppelte Licht (100) mittels interner Reflexion von dem Lichteinkoppelbereich (17) an den Lichtauskoppelbereich (19) zu übertragen; und
der Lichtauskoppelbereich (19) als holografisches Element (14) mit einer vierten Ablenkstruktur (26) ausgebildet ist, die dazu ausgelegt ist, das übertragene Licht (100), das auf die vierte Ablenkstruktur (26) fällt, aus dem zweiten Trägermedium (12') auszukoppeln und in Richtung der Person (31) auszusenden.

4. Erfassungsvorrichtung (10) nach dem vorhergehenden Anspruch, wobei das erste flächige Trägermedium (12) und das zweite flächige Trägermedium (12') als ein gemeinsames Hauptträgermedium (12") ausgebildet sind, an dem der Einkoppelbereich (16), der Auskoppelbereich (18), der Lichteinkoppelbereich (17) und der Lichtauskoppelbereich (19) bereitgestellt sind.

5. Erfassungsvorrichtung (10) nach einem der vorhergehenden Ansprüche, wobei die Erfassungsvorrichtung (10) eine Mikrofoneinrichtung (40) umfasst, die dazu ausgelegt ist, Sprachdaten der Person (31) zu erfassen und der Auswerteeinrichtung (13) bereitzustellen, wobei die Auswerteeinrichtung (13) dazu ausgelegt ist, unter Anwendung eines Gewichtungskriteriums auf die bereitgestellten Schwingungsdaten und Sprachdaten Ausgangsdaten für die Interpretationseinheit (13b) bereitzustellen und durch deren Auswerten unter Anwendung des Sprachinterpretationskriteriums das Sprachsignal der Person (31) bereitzustellen.

6. Kraftfahrzeug (32) mit einer Erfassungsvorrichtung (10) nach einem der vorhergehenden Ansprüche, wobei das erste flächige Trägermedium (12) mit dem Einkoppelbereich (16) und dem Auskoppelbereich (18) an einer von folgenden Positionen angeordnet ist:
- in einem Bildschirm einer Anzeigevorrichtung im Fahrzeuginnenraum (34);
- in einem Rückspiegel;
- in einer Mittelkonsole;
- in einem Armaturenbrett;
- in einem Kombinationsinstrument;
- in einer Windschutzscheibe (36);
- in einem Seitenfenster;
- zwischen zwei A-Säulen (37) des Kraftfahrzeugs (32).

7. Kraftfahrzeug (32) nach dem vorhergehenden Anspruch, wobei das Kraftfahrzeug (32) zumindest eine Erfassungseinrichtung (44), insbesondere eine Kameraeinrichtung, eine Beschleunigungserfassungseinrichtung und/oder eine Drehratenerfassungseinrichtung, umfasst, wobei die zumindest eine Erfassungseinrichtung (44) dazu ausgebildet ist, zusätzliche Daten betreffend eine Bewegung des Kraftfahrzeugs (32) und/oder eine Bewegung von Insassen des Kraftfahrzeugs (32) zu erfassen und diese von ihr erfassten Erfassungsdaten für die Auswerteeinrichtung (13) bereitzustellen, und die Auswerteeinrichtung (13) dazu ausgelegt ist, die Erfassungsdaten zum Erzeugen des Sprachsignals der Person (31) mittels der Interpretationseinheit (13b) auszuwerten.

8. Verfahren zum Erfassen eines Sprachsignals einer Person (31) mit einer Erfassungsvorrichtung (10), die eine Lichtquelle (30), eine Sensoreinrichtung (11), eine Auswerterichtung (13), die eine Umwandlungseinheit (13a) und eine Interpretationseinheit (13b) aufweist, sowie ein erstes flächiges Trägermedium (12) umfasst, wobei das erste flächige Trägermedium (12) als Lichtleiter ausgebildet ist, an dem ein Einkoppelbereich (16), der als holografisches Element (14) mit einer ersten Ablenkstruktur (20) ausgebildet ist, und ein Auskoppelbereich (18), der als holografisches Element (14) mit einer zweiten Ablenkstruktur (22) ausgebildet ist, bereitgestellt sind, wobei das erste flächige Trägermedium (12) mit dem Einkoppelbereich (16) und dem Auskoppelbereich (18) als eine transparente Platte, Folie oder Lack ausgebildet ist und der Einkoppelbereich (16) und der Auskoppelbereich (18) als jeweilige Ablenkstruktur (20, 22) zumindest ein holografisches Volumengitter oder ein holografisches Oberflächengitter aufweisen, umfassend die Schritte:
- Aussenden von gepulstem Licht (100) mittels der Lichtquelle (30) in eine Richtung einer vorderen Halsregion (31') der Person (31) (S1);
- Einkoppeln von Licht (100'), das von der Lichtquelle (30) ausgesendet und an der vorderen Halsregion (31') der Person (31) reflektierte wird, mittels der ersten Ablenkstruktur (20) (S2);
- Übertragen des eingekoppelten reflektierten Lichts (100') mittels interner Reflexion von dem Einkoppelbereich (16) an den Auskoppelbereich (18) mittels des ersten flächigen Trägermediums (12) (S3);
- Auskoppeln des übertragene reflektierte Licht (100'), das auf die zweite Ablenkstruktur (22) fällt, aus dem ersten flächigen Trägermedium (12) mittels der zweiten Ablenkstruktur (22) (S4);
- Erfassen des im Auskoppelbereich (18) ausgekoppelten Lichts (100') (S5) und Bereitstellen von Sensordaten, die eine Laufzeitdauer des von der Lichtquelle (30) ausgesendeten und an der vorderen Halsregion (31') der Person (31) reflektierten gepulsten Lichts (100') beschreiben, mittels der Sensoreinrichtung (11) (S6);
- Umwandeln der Sensordaten in Schwingungsdaten, die eine Relativbewegung der vorderen Halsregion (31') der Person (31) beschreiben, mittels der Umwandlungseinheit (13a) der Auswerteeinrichtung (13) (S7) und Bereitstellen des Sprachsignals der Person (31) mittels der Interpretationseinheit (13b) der Auswerteeinrichtung (13) durch Auswerten der Schwingungsdaten unter Anwendung eines Sprachinterpretationskriteriums auf die Schwingungsdaten (S8), wobei das Sprachinterpretationskriterium jeweilige Schwingungsdaten enthält, die mit jeweiligen Sprachsignalkomponenten, aus denen sich das Sprachsignal der Person zusammensetzt, korreliert sind, sodass die Interpretationseinheit (13b) dazu ausgelegt ist, unter Hinzuziehen des Sprachinterpretationskriteriums die Schwingungsdaten derart auszuwerten, dass das Sprachsignal der Person (31) bereitstellbar ist,
wobei die Erfassungsvorrichtung (10) eine Bilderfassungseinrichtung (42) umfasst, die Umgebungslicht, das aus der Umgebung auf den Einkoppelbereich (16) trifft, von dem ersten flächigen Trägermedium (12) zum Auskoppelbereich (18) übertragen und am Auskoppelbereich (18) ausgekoppelt wird, erfasst und in Form von Bilddaten, die mit dem erfassten Umgebungslicht korrelieren, der Auswerteeinrichtung (13) bereitstellt, wobei die Auswerteeinrichtung (13) unter Anwendung eines Abgleichkriteriums auf die bereitgestellten Schwingungsdaten und Bilddaten Ausgangsdaten für die Interpretationseinheit (13b) bereitstellt und durch deren Auswerten unter Anwendung des Sprachinterpretationskriteriums das Sprachsignal der Person (31) bereitstellt.

## Claims

1. A detection device (10) for a voice signal of a person (31), wherein the detection device (10) includes a light source (30), a sensor device (11), an evaluation device (13), which comprises a conversion unit (13a) and an interpretation unit (13b), as well as a first planar carrier medium (12), wherein the first planar carrier medium (12) is formed as a light guide, at which a coupling-in area (16) and a coupling-out area (18) are provided, wherein the first planar carrier medium (12) with the coupling-in area (16) and the coupling-out area (18) is formed as a transparent plate, foil or varnish,
wherein
- the light source (30) is formed to emit pulsed light (100);
- the coupling-in area (16) is formed as a holographic element (14) with a first deflection structure (20), which is configured to couple light (100'), which is emitted from the light source (30) and reflected on the person (31), into the first planar carrier medium (12);
- the first planar carrier medium (12) is formed to transfer the coupled-in reflected light (100') from the coupling-in area (16) to the coupling-out area (18) by means of internal reflection;
- the coupling-out area (18) is formed as a holographic element (14) with a second deflection structure (22), which is configured to couple the transferred reflected light (100'), which is incident on the second deflection structure (22), out of the first planar carrier medium (12), wherein the coupling-in area (16) and the coupling-out area (18) comprise at least one holographic volume grating or holographic surface grating as the respective deflection structure (20, 22);
- the sensor device (11) is formed to detect the light (100') coupled out in the coupling-out area (18) and to provide it in the form of sensor data, which describes a travel time duration of the pulsed light (100') emitted from the light source (30) and reflected on the person (31); and
- the evaluation device (13) is formed to convert the sensor data into oscillation data by means of the conversion unit (13a) and to provide the voice signal of the person (31) by means of the interpretation unit (13b) by evaluating the oscillation data by applying a voice interpretation criterion, wherein the voice interpretation criterion contains respective oscillation data, which is correlated with respective voice signal components, from which the voice signal of the person is composed, such that the interpretation unit (13b) is configured to evaluate the oscillation data by consulting the voice interpretation criterion such that the voice signal of the person (31) can be provided,
wherein the detection device (10) includes an image detection device (42), which is formed to detect ambient light, which impinges from the environment onto the coupling-in area (16), is transferred to the coupling-out area (18) by the first planar carrier medium (12) and is coupled out at the coupling-out area (18), and to provide it in the form of image data, which correlates with the detected ambient light, to the evaluation device (13), wherein the evaluation device (13) is configured to provide output data for the interpretation unit (13b) by applying a comparison criterion to the provided oscillation data and image data and to provide, by evaluation thereof by applying the voice interpretation criterion, the voice signal of the person (31).

2. The detection device (10) according to the preceding claim, wherein in evaluating the oscillation data by applying the voice interpretation criterion, the provided oscillation data is compared to reference oscillation patterns recorded in the interpretation unit (13b), wherein the respective recorded reference oscillation patterns are associated with respective voice signals.

3. The detection device (10) according to any one of the preceding claims, wherein a light coupling-in area (17) and a light coupling-out area (19) are provided at a second planar carrier medium (12'), wherein
the light coupling-in area (17) is formed as a holographic element (14) with a third deflection structure (24), which is configured to couple light (100), which is incident from the light source (30) of the detection device (10) to the third deflection structure (24), into the second planar carrier medium (12');
the second planar carrier medium (12') is formed to transfer the coupled-in light (100) from the light coupling-in area (17) to the light coupling-out area (19) by means of internal reflection; and
the light coupling-out area (19) is formed as a holographic element (14) with a fourth deflection structure (26), which is configured to couple the transferred light (100), which is incident on the fourth deflection structure (26), out of the second carrier medium (12') and to emit it towards the person (31).

4. The detection device (10) according to the preceding claim, wherein the first planar carrier medium (12) and the second planar carrier medium (12') are formed as a common main carrier medium (12"), at which the coupling-in area (16), the coupling-out area (18), the light coupling-in area (17) and the light coupling-out area (19) are provided.

5. The detection device (10) according to any one of the preceding claims, wherein the detection device (10) includes a microphone device (40), which is configured to detect voice data of the person (31) and to provide it to the evaluation device (13), wherein the evaluation device (13) is configured to provide output data for the interpretation unit (13b) by applying a weighting criterion to the provided oscillation data and voice data and to provide, by evaluation thereof by applying the voice interpretation criterion, the voice signal of the person (31).

6. A motor vehicle (32) with a detection device (10) according to any one of the preceding claims, wherein the first planar carrier medium (12) with the coupling-in area (16) and the coupling-out area (18) is arranged in one of the following positions:
- in a screen of a display device in the vehicle interior (34);
- in a rearview mirror;
- in a center console;
- in a dashboard;
- in an instrument cluster;
- in a windshield (36);
- in a side window;
- between two A-pillars (37) of the motor vehicle (32).

7. The motor vehicle (32) according to the preceding claim, wherein the motor vehicle (32) includes at least one detection device (44), in particular a camera device, an acceleration detection device and/or a rotation rate detection device, wherein the at least one detection device (44) is formed to detect additional data relating to a movement of the motor vehicle (32) and/or a movement of occupants of the motor vehicle (32) and to provide this detection data detected by it for the evaluation device (13), and the evaluation device (13) is configured to evaluate the detection data for generating the voice signal of the person (31) by means of the interpretation unit (13b).

8. A method for detecting a voice signal of a person (31) with a detection device (10), which includes a light source (30), a sensor device (11), an evaluation device (13), which comprises a conversion unit (13a) and an interpretation unit (13b), as well as a first planar carrier medium (12), wherein the first planar carrier medium (12) is formed as a light guide, at which a coupling-in area (16), which is formed as a holographic element (14) with a first deflection structure (20), and a coupling-out area (18), which is formed as a holographic element (14) with a second deflection structure (22), are provided, wherein the first planar carrier medium (12) with the coupling-in area (16) and the coupling-out area (18) is formed as a transparent plate, foil or varnish, and the coupling-in area (16) and the coupling-out area (18) comprise at least one holographic volume grating or holographic surface grating as the respective deflection structure (20, 22), comprising the steps:
- emitting pulsed light (100) by means of the light source (30) towards a front neck region (31') of the person (31) (S1);
- coupling-in light (100'), which is emitted from the light source (30) and reflected on the front neck region (31') of the person (31), by means of the first deflection structure (20) (S2);
- transferring the coupled-in reflected light (100') by means of internal reflection from the coupling-in area (16) to the coupling-out area (18) by means of the first planar carrier medium (12) (S3);
- coupling the transferred reflected light (100'), which is incident on the second deflection structure (22), out of the first planar carrier medium (12) by means of the second deflection structure (22) (S4);
- detecting the light (100') coupled out in the coupling-out area (18) (S5) and providing sensor data, which describes a travel time duration of the pulsed light (100') emitted from the light source (30) and reflected on the front neck region (31') of the person (31), by means of the sensor device (11) (S6);
- converting the sensor data into oscillation data, which describes a relative movement of the front neck region (31') of the person (31), by means of the conversion unit (13a) of the evaluation device (13) (S7) and providing the voice signal of the person (31) by means of the interpretation unit (13b) of the evaluation device (13) by evaluating the oscillation data by applying a voice interpretation criterion to the oscillation data (S8), wherein the voice interpretation criterion contains respective oscillation data, which is correlated with respective voice signal components, from which the voice signal of the person is composed, such that the interpretation unit (13b) is configured to evaluate the oscillation data by consulting the voice interpretation criterion such that the voice signal of the person (31) can be provided,
wherein the detection device (10) includes an image detection device (42), which detects ambient light, which impinges from the environment onto the coupling-in area (16), is transferred to the coupling-out area (18) by the first planar carrier medium (12) and is coupled out at the coupling-out area (18), and provides it in the form of image data, which correlates with the detected ambient light, to the evaluation device (13), wherein the evaluation device (13) provides output data for the interpretation unit (13b) by applying a comparison criterion to the provided oscillation data and image data and provides, by evaluation thereof by applying the voice interpretation criterion, the voice signal of the person (31).

## Revendications

1. Dispositif de capture (10) pour un signal de parole d'une personne (31), dans lequel le dispositif de capture (10) comprend une source de lumière (30), un dispositif de capteur (11), un dispositif d'évaluation (13) comportant une unité de conversion (13a) et une unité d'interprétation (13b), ainsi qu'un premier support plat (12), le premier support plat (12) étant réalisé sous la forme d'un conduit de lumière sur lequel une zone de couplage (16) et une zone de découplage (18) sont fournies, le premier support plat (12) avec la zone de couplage (16) et la zone de découplage (18) étant réalisé sous la forme d'une plaque, d'un film ou d'un vernis transparent,
- la source de lumière (30) étant configurée pour émettre de la lumière pulsée (100) ;
- la zone de couplage (16) étant réalisée sous la forme d'un élément holographique (14) ayant une première structure de déviation (20) conçue pour coupler dans le premier support plat (12) de la lumière (100') émise par la source de lumière (30) et réfléchie sur la personne (31),
- le premier support plat (12) étant configuré pour transmettre la lumière réfléchie couplée (100') par réflexion interne de la zone de couplage (16) à la zone de découplage (18) ;
- la zone de découplage (18) étant réalisée sous la forme d'un élément holographique (14) ayant une deuxième structure de déviation (22) conçue pour découpler du premier support plat (12) la lumière réfléchie transmise (100') qui est incidente sur la deuxième structure de déviation (22), la zone de couplage (16) et la zone de découplage (18) comportant, en tant que structure de déviation (20, 22) respective, au moins un réseau holographique volumique ou un réseau holographique surfacique ;
- le dispositif de capteur (11) étant configuré pour capturer la lumière (100') découplée dans la zone de découplage (18) et pour la fournir sous forme de données de capteur qui décrivent une durée de propagation de la lumière pulsée (100') émise par la source de lumière (30) et réfléchie sur la personne (31) ; et
- le dispositif d'évaluation (13) étant configuré pour convertir les données de capteur en données vibratoires au moyen de l'unité de conversion (13a) et pour fournir le signal de parole de la personne (31) au moyen de l'unité d'interprétation (13b) en appliquant un critère d'interprétation de la parole pour évaluer les données vibratoires, le critère d'interprétation de la parole contenant des données vibratoires respectives qui sont corrélées avec des composantes respectives du signal de parole qui constituent le signal de parole de la personne, de sorte que l'unité d'interprétation (13b) est conçue pour évaluer les données vibratoires en incluant le critère d'interprétation de la parole, de telle sorte que le signal de parole de la personne (31) peut être fourni,
le dispositif de capture (10) comprenant un dispositif de capture d'image (42) configuré pour capturer la lumière ambiante provenant de l'environnement qui est incidente sur la zone de couplage (16), est transmise à partir du premier support plat (12) à la zone de découplage (18) et est découplée au niveau de la zone de découplage (18), et pour la fournir au dispositif d'évaluation (13) sous forme de données d'image qui sont corrélées avec la lumière ambiante détectée, le dispositif d'évaluation (13) étant conçu pour fournir des données de sortie destinées à l'unité d'interprétation (13b) en appliquant un critère de comparaison aux données vibratoires et aux données d'image fournies, et pour fournir le signal de parole de la personne (31) en appliquant le critère d'interprétation de la parole pour les évaluer.

2. Dispositif de capture (10) selon la revendication précédente, dans lequel, lors de l'évaluation des données vibratoires en appliquant le critère d'interprétation de la parole, les données vibratoires fournies sont comparées à des modèles de vibration de référence stockés dans l'unité d'interprétation (13b), les modèles de vibration de référence stockés respectifs étant associés à des signaux de parole respectifs.

3. Dispositif de capture (10) selon l'une des revendications précédentes, dans lequel une zone de couplage de lumière (17) et une zone de découplage de lumière (19) sont prévues sur un second support plat (12'),
la zone de couplage de lumière (17) étant réalisée sous la forme d'un élément holographique (14) ayant une troisième structure de déviation (24) conçue pour coupler dans le second support plat (12') la lumière (100) de la source de lumière (30) du dispositif de capture (10) qui est incidente sur la troisième structure de déviation (24),
le second support plat (12') étant configuré pour transmettre à la zone de découplage de lumière (19) la lumière couplée (100) par réflexion interne de la zone de couplage de lumière (17) ; et
la zone de découplage de lumière (19) étant réalisée sous la forme d'un élément holographique (14) ayant une quatrième structure de déviation (26) conçue pour découpler du second support (12') la lumière transmise (100) qui est incidente sur la quatrième structure de déviation (26) et l'émettre en direction de la personne (31).

4. Dispositif de capture (10) selon la revendication précédente, dans lequel le premier support plat (12) et le second support plat (12') sont réalisés sous la forme d'un support principal commun (12"), sur lequel la zone de couplage (16), la zone de découplage (18), la zone de couplage de lumière (17) et la zone de découplage de lumière (19) sont prévues.

5. Dispositif de capture (10) selon l'une des revendications précédentes, dans lequel le dispositif de capture (10) comprend un dispositif à microphone (40) conçu pour détecter des données vocales de la personne (31) et pour les fournir au dispositif d'évaluation (13), le dispositif d'évaluation (13) étant conçu pour fournir des données de sortie destinées à l'unité d'interprétation (13b) en appliquant un critère de pondération aux données vibratoires et aux données vocales fournies, et pour fournir le signal de parole de la personne (31) en appliquant le critère d'interprétation de la parole pour les évaluer.

6. Véhicule à moteur (32) ayant un dispositif de capture (10) selon l'une des revendications précédentes, dans lequel le premier support plat (12) avec la zone de couplage (16) et la zone de découplage (18) est disposé dans l'une des positions suivantes :
- sur un écran d'un dispositif d'affichage situé dans l'habitacle de véhicule (34) ;
- dans un rétroviseur ;
- dans une console centrale ;
- dans un tableau de bord ;
- dans un groupe d'instruments ;
- dans un pare-brise (36) ;
- dans une vitre latérale ;
- entre deux montants avant (37) du véhicule à moteur (32).

7. Véhicule à moteur (32) selon la revendication précédente, dans lequel le véhicule à moteur (32) comprend au moins un dispositif de détection (44), en particulier un dispositif à caméra, un dispositif de détection d'accélération et/ou un dispositif de détection de vitesse de rotation, le au moins un dispositif de détection (44) étant conçu pour détecter des données supplémentaires concernant un mouvement du véhicule à moteur (32) et/ou un mouvement de passagers du véhicule à moteur (32), et pour fournir ces données de détection détectées destinées au dispositif d'évaluation (13), et le dispositif d'évaluation (13) étant conçu pour évaluer les données de détection afin de générer le signal de parole de la personne (31) au moyen de l'unité d'interprétation (13b).

8. Procédé pour capturer un signal de parole d'une personne (31) avec un dispositif de capture (10) comprenant une source de lumière (30), un dispositif de capteur (11), un dispositif d'évaluation (13) comportant une unité de conversion (13a) et une unité d'interprétation (13b), ainsi qu'un premier support plat (12), le premier support plat (12) étant réalisé sous la forme d'un conduit de lumière sur lequel une zone de couplage (16) réalisée sous la forme d'un élément holographique (14) ayant une première structure de déviation (20) et une zone de découplage (18) réalisée sous la forme d'un élément holographique (14) ayant une deuxième structure de déviation (22) sont fournies, le premier support plat (12) avec la zone de couplage (16) et la zone de découplage (18) étant réalisé sous la forme d'une plaque, d'un film ou d'un vernis transparent, et la zone de couplage (16) et la zone de découplage (18) comportant, en tant que structure de déviation (20, 22) respective, au moins un réseau holographique volumique ou un réseau holographique surfacique, comportant les étapes consistant à :
- émettre de la lumière pulsée (100) au moyen de la source de lumière (30) en direction d'une zone antérieure du cou (31') de la personne (31) (S1) ;
- coupler de la lumière (100') émise par la source de lumière (30) et réfléchie sur la zone antérieure du cou (31') de la personne (31), au moyen de la première structure de déviation (20) (S2) ;
- transmettre la lumière réfléchie couplée (100') par réflexion interne de la zone de couplage (16) à la zone de découplage (18), au moyen du premier support plat (12) (S3) ;
- découpler du premier support plat (12) la lumière réfléchie transmise (100') qui est incidente sur la deuxième structure de déviation (22), au moyen de la deuxième structure de déviation (22) (S4) ;
- capturer la lumière (100') découplée dans la zone de découplage (18) (S5) et fournir des données de capteur décrivant une durée de propagation de la lumière pulsée (100') émise par la source de lumière (30) et réfléchie sur la zone antérieure du cou (31') de la personne (31), au moyen du dispositif de capteur (11) (S6) ;
- convertir les données de capteur en données vibratoires décrivant un mouvement relatif de la zone antérieure du cou (31') de la personne (31) au moyen de l'unité de conversion (13a) du dispositif d'évaluation (13) (S7) et fournir le signal de parole de la personne (31) au moyen de l'unité d'interprétation (13b) du dispositif d'évaluation (13) en évaluant les données vibratoires en appliquant un critère d'interprétation de la parole aux données vibratoires (S8), le critère d'interprétation de la parole contenant des données vibratoires respectives qui sont corrélées avec des composantes respectives du signal de parole qui constituent le signal de parole de la personne, de sorte que l'unité d'interprétation (13b) est conçue pour évaluer les données vibratoires en incluant le critère d'interprétation de la parole, de telle sorte que le signal de parole de la personne (31) peut être fourni,
le dispositif de capture (10) comprenant un dispositif de capture d'image (42) qui capture la lumière ambiante provenant de l'environnement qui est incidente sur la zone de couplage (16), est transmise du premier support plat (12) à la zone de découplage (18) et est découplée au niveau de la zone de découplage (18), et la fournit au dispositif d'évaluation (13) sous forme de données d'image qui sont corrélées avec la lumière ambiante détectée, le dispositif d'évaluation (13) fournissant des données de sortie destinées à l'unité d'interprétation (13b) en appliquant un critère de comparaison aux données vibratoires et aux données d'image fournies, et fournissant le signal de parole de la personne (31) en appliquant le critère d'interprétation vocale pour les évaluer.
